(19) Europäisches Patentamt
European Patent Office
Office européen des brevets

(11) **EP 2 871 371 B1**

(12) # EUROPEAN PATENT SPECIFICATION

(45) Date of publication and mention
of the grant of the patent:
**14.09.2016 Bulletin 2016/37**

(21) Application number: **14190853.3**

(22) Date of filing: **29.10.2014**

(51) Int Cl.:
*F15B 13/043* (2006.01)    *F15B 13/042* (2006.01)
*F04B 1/04* (2006.01)    *F03C 1/34* (2006.01)
*F16K 11/00* (2006.01)    *F03D 9/00* (2016.01)

(54) **Switching unit, hydraulic machine and power generating apparatus**

Schalteinheit, hydraulische Maschine und Stromerzeugungsvorrichtung

Unité de commutation, machine hydraulique et appareil de génération de puissance

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2013 JP 2013231560
27.02.2014 JP 2014036705**

(43) Date of publication of application:
**13.05.2015 Bulletin 2015/20**

(73) Proprietors:
• **MITSUBISHI HEAVY INDUSTRIES, LTD.
Tokyo 108-8215 (JP)**
• **Toyooki Kogyo Co., Ltd.
Okazaki-shi, Aichi, 444-3592 (JP)**

(72) Inventors:
• **Shimizu, Masayuki
TOKYO, 108-8215 (JP)**
• **Uchida, Michiya
TOKYO, 108-8215 (JP)**
• **Hitomi, Haruki
TOKYO, 108-8215 (JP)**
• **Fujisaka, Masahiro
OKAZAKI-SHI, AICHI, 444-3592 (JP)**

(74) Representative: **Intès, Didier Gérard André et al
Cabinet Beau de Loménie
158, rue de l'Université
75340 Paris Cedex 07 (FR)**

(56) References cited:
**WO-A1-2013/005258    GB-A- 1 153 395
GB-A- 1 270 958    US-A- 3 234 857
US-A- 3 329 159**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a switching unit for switching pressure of a pressure-switching target chamber of a hydraulic machine.

BACKGROUND

Conventionally, in a hydraulic machine including a hydraulic pump, a hydraulic motor and the like, a spool valve may be used to control hydraulic pressure.

Patent Document 1 discloses a spool valve being used as a control valve for adjusting the discharge rate of a vane pump. In this spool valve, a pressure-receiving surface on one end side of the spool is spring-biased. A magnitude relationship between a sum of the biasing force of the spring acting on the pressure-receiving surface on one end side and the force of hydraulic pressure and the force of hydraulic pressure acting on the pressure-receiving surface of the other end side of the spool is switched in accordance with the rotation speed of the vane pump. As a result, the spool is caused to move in the axial direction.

Citation List

Patent Literature

Patent Document 1: JP2010-168899A1
Moreover US3234857 (A) discloses an electrohydraulic unit for controlling hydraulic transducers comprising a slide-valve.
GB1270958 (A) refers to a fluid control valve consisting of a longitudinally slidable or spool type main valve member displaceable by the fluid.
From US3329159 (A) a reversing valve driven by a pressure medium, for example a slide valve, is known.

SUMMARY

In Patent Document 1 described above, a valve high-pressure chamber on one end side of the spool is connected to a discharge port of the vane pump via a variable damper orifice. A valve medium-pressure chamber on the other end side of the spool is connected to the discharge port of the vane pump via a metering orifice. Thus, hydraulic pressure acting on the pressure-receiving surface of the one end side of the spool (pressure-receiving surface on a high-pressure chamber side) and hydraulic pressure acting on the pressure-receiving surface of the other end side of the spool (pressure-receiving surface of a medium-pressure chamber side) are controlled to be different from each other by utilizing pressure loss caused by each orifice. A relatively complex hydraulic circuit is used in order to operate the spool.

An object of the present invention is to provide a switching unit which has a spool valve capable of switching at least a part of hydraulic pressure acting on each pressure-receiving surface of a spool with a standardized and simplified configuration.

A switching unit according to claim 1 of the present invention is for switching pressure in a pressure-switching target chamber of a hydraulic machine which includes the pressure-switching target chamber, a high pressure oil line, and a low pressure oil line. The switching unit includes a spool valve including a first chamber; a second chamber; and a spool including a first pressure-receiving surface formed so as to receive hydraulic pressure of the first chamber and a second pressure-receiving surface formed so as to receive hydraulic pressure of the second chamber, the second pressure-receiving surface having an area smaller than that of the first pressure-receiving surface. The spool valve is configured to switch the hydraulic pressure of the first chamber between pressure $P_2$ which is higher than pressure in the low pressure oil line and pressure $P_1$ which is lower than the pressure $P_2$, while maintaining the hydraulic pressure of the second chamber at the pressure $P_2$, so that the spool is moved and the pressure in the pressure-switching target chamber is switched.

According to the switching unit described in claim 1, the area of the second pressure-receiving surface of the first spool is smaller than the area of the first receiving surface of the first spool. Thus, in a case where the pressure $P_2$ is applied to each of the first pressure-receiving surface and the second pressure receiving surface, the force received by the first pressure-receiving surface becomes larger than the force received by the second pressure-receiving surface. On the other hand, in a case where the pressure $P_1$ being lower than the pressure $P_2$ is applied to the first pressure-receiving surface in a state where the pressure $P_2$ is being applied to the second pressure-receiving surface, setting the pressure $P_1$ appropriately makes it possible to make the force received by the first pressure-receiving surface smaller than the force received by the second pressure-receiving surface. Thus, by switching hydraulic pressure of the first chamber between pressure $P_1$, which is smaller than pressure $P_2$, and pressure $P_2$ while maintaining hydraulic pressure of the second chamber at the pressure $P_2$, it is possible to switch hydraulic pressure of a pressure-switching target chamber by a simplified configuration in which one of hydraulic pressures which act on the first pressure-receiving surface and hydraulic pressure which acts on the second pressure-receiving surface are standardized. Further, by making the standardized pressure $P_2$ which acts on the first pressure-receiving surface and the second pressure-receiving surface larger than pressure of the low pressure oil line, it is possible to increase speed of the movement of the spool and the accompanying switching of the hydraulic pressure in the pressure-switching target chamber.

In the switching unit described in claim 1, the spool valve includes: a low-pressure port configured to be in communication with a first hydraulic pressure line having the pressure $P_1$; a high-pressure port configured to be in communication with a second hydraulic line having the pressure $P_2$; and an output port configured to be in communication with the pressure-switching target chamber. Also, a port which is in communication with the output port is configured to be switched between the high-pressure port and the low-pressure port, so that the pressure of the pressure-switching target chamber is switched between the pressure $P_1$ and the pressure $P_2$.

According to the switching unit described in claim 1, pressure for moving the spool ($P_1$ and $P_2$) and pressure that is to be switched in the pressure-switching target chamber ($P_1$ and $P_2$) are standardized. Thus, it is possible to switch pressure of the pressure-switching target chamber by a simplified configuration.

In some embodiments, in the switching unit described in claim 1, the first hydraulic line is the low pressure oil line or a drain line included in the hydraulic machine, and the second hydraulic line is the high pressure oil line.

According to the switching unit described above, it is possible to switch hydraulic pressure of a hydraulic-pressure-switching target chamber by a simplified configuration in which pressure of the low pressure oil line or the drain line and pressure of the high pressure oil line inherently included in a hydraulic machine are utilized as pressure which act on the first pressure-receiving surface and the second pressure-receiving surface.

The switching unit described in claim 1 further includes a two-port solenoid valve configured to switch the hydraulic pressure of the first chamber between the pressure $P_1$ and the pressure $P_2$.

For moving the spool by hydraulic pressure (pilot pressure) in a spool valve, one may consider adopting a configuration in which a three-port or four-port solenoid valve is used to change each pressure that is to be applied on one end surface and the other end surface of the spool. When a three-port or four-port solenoid valve is used, the stroke tends to be long in accordance with the distance in which the land portions slide between the ports. Thus, it is difficult to improve the responsiveness.

In contrast, the switching unit described in claim 1 is capable of moving the spool by switching only the hydraulic pressure of the first chamber by opening and closing the two-port solenoid valve. As a result, compared to the above configuration in which the spool is moved using a three-port or four-port solenoid valve, it is possible to easily shorten the stroke required for switching the solenoid valve (stroke of the movable part including the valve body). Accordingly, it is possible to improve the responsiveness of the solenoid valve and to increase speed of the accompanying switching of hydraulic pressure of the hydraulic pressure-switching target chamber.

In some embodiments, in the switching unit described in claim 1, the two-port solenoid valve includes a valve seat and a poppet configured to move in a perpendicular direction with respect to the valve seat. The two-port solenoid valve is configured to be opened and closed in accordance with movement of the poppet, so that the hydraulic pressure of the first chamber is switched between the pressure $P_1$ and the pressure $P_2$.

According to the switching unit described above, the two-port solenoid valve is opened and closed by moving the poppet in a direction perpendicular to the valve seat. Thus, it is possible to further shorten the stroke of the movable part including the valve seat of the solenoid valve. As a result, it is possible to further improve the responsiveness of the solenoid valve and to further increase speed of the accompanying switching of hydraulic pressure of the hydraulic-pressure-switching target chamber.

In the switching unit described in claim 1, the spool valve includes a first flow-path part configured to bring the high-pressure port into communication with the first chamber and a second flow-path part configured to bring the high-pressure port into communication with the second chamber, the first flow-path part including a restricting portion.

According to the switching unit described above, a restriction portion is disposed in the first flow-path part which brings the high-pressure port into communication with the first chamber. Thus, when there is a pressure difference caused between the high-pressure port and the first chamber, it is possible to supply high pressure oil having a flow rate which corresponds to the area of the flow path of the restriction portion from the high-pressure port to the first chamber. As a result, by setting the area of the flow path of the restriction portion appropriately, it is possible to adjust the timing of switching hydraulic pressure of the first chamber by a simplified configuration.

In the switching unit described in claim 1, the first flow-path part and the second flow-path part are disposed inside the spool and branched from a flow path that is configured to communicate with the high-pressure port to connect to the first chamber and the second chamber, respectively.

According to the switching unit described above, it is possible to establish a communicating state among the high-pressure port, the first chamber, and the second chamber by a simplified configuration of flow paths.

In some embodiments, in the switching unit according to any one of claims 1 to 5, the switching unit further includes a discharge port configured to discharge high pressure oil inside the first chamber to the drain line or to the low pressure oil line included in the hydraulic machine. Also, the two-port solenoid valve is disposed in a flow path between the first chamber and the discharge port, and hydraulic pressure of the discharge port is the pressure $P_1$. Moreover, the spool valve is configured so that: the high pressure oil inside the first chamber is discharged from the discharge port to decrease the hydraulic pressure of the first chamber from the pressure

$P_2$ toward the pressure $P_1$ upon the two-port solenoid valve being opened; and the high pressure oil that has flowed into the first chamber from the restricting portion increases the hydraulic pressure of the first chamber from the pressure $P_1$ toward the pressure $P_2$ upon the two-port solenoid valve being closed.

According to the switching unit described above, it is possible to switch hydraulic pressure of the first chamber at high speed only by opening and closing the two-port solenoid valve using a simplified configuration.

In some embodiments, in the switching unit described in any one of claims 1 to 6, a relationship of

$$0.7 \leqq A/B \leqq 1.3$$

is satisfied, where A is a period of time after starting energization of a solenoid coil included in the two-port solenoid valve and before completing movement of the spool, and B is a period of time after halting the energization of the solenoid coil and before completing the movement of the spool.

According to the switching unit described above, it is possible to equalize the intervals of time in which pressure of the pressure-switching target chamber is switched.

In some embodiments, in the switching unit described in any one of claims 1 to 7, the spool valve is configured to satisfy a relationship of

$$0.7 \leqq \frac{S_2}{S_1} \cdot \frac{2P_2}{P_1+P_2} \leqq 1.3 \quad ,$$

, where $S_1$ is the area of the first pressure-receiving surface and $S_2$ is the area of the second pressure-receiving surface.

According to the switching unit described above, the resultant force of the force received by the spool from hydraulic pressure of the first chamber and the force received by the spool from hydraulic pressure of the second chamber is substantially equal between the time when pressure $P_1$ is applied and the time when pressure $P_2$ is applied to the first pressure-receiving surface (directions of the resultant forces are opposite). As a result, it is possible to make the responsiveness of the spool substantially equal between a case where hydraulic pressure of the first chamber is switched from $P_1$ to $P_2$ and a case where it is switched from $P_2$ to $P_1$.

A hydraulic machine according to some embodiments includes: the pressure-switching target chamber; the high pressure oil line; the low pressure oil line; and the switching unit configured to switch pressure of the pressure-switching target chamber. Also, the switching unit is the one described in any one of claims 1 to 8.

According to the hydraulic machine described above, it is possible to switch hydraulic pressure of a pressure-switching target chamber by a simplified configuration in which one of hydraulic pressures which may act on the first pressure-receiving surface and hydraulic pressure which acts on the second pressure-receiving surface are standardized. Further, by making the standardized pressure $P_2$ which acts on the first pressure-receiving surface and the second pressure-receiving surface larger than pressure of the low pressure oil line, it is possible to increase speed of the movement of the spool and the accompanying switching of hydraulic pressure of the pressure-switching target chamber.

A power generating apparatus according to some embodiments is for generating electric power from renewable energy. The power generating apparatus includes: a main shaft configured to rotate utilizing the renewable energy; a hydraulic machine configured to be driven by rotation of the main shaft; and a generator configured to be driven by the hydraulic machine. Also, the hydraulic machine is the one described in claim 9.

The hydraulic machine described in claim 9 is capable of switching hydraulic pressure of a hydraulic pressure-switching target chamber at high speed by a simplified configuration. Thus, it can be suitably used for driving a generator which rotates at high speed. Therefore, according to the power generating apparatus described above, it is possible to generate electric power from renewable energy by suitably using a hydraulic machine having a simplified configuration.

A power generating apparatus includes: at least one blade; a main shaft configured to be rotated by renewable energy received by the at least one blade; a hydraulic machine configured to be driven by rotation of the main shaft; and a generator configured to be driven by the hydraulic machine. Also, the hydraulic machine is the one described in claim 9.

The hydraulic machine described in claim 9 is capable of switching hydraulic pressure of a hydraulic-pressure-switching target chamber at high speed by a simplified configuration. Thus, it can be suitably used for driving a generator which rotates at high speed. Therefore, according to the power generating apparatus described above, it is possible to generate electric power from renewable energy received at the blade by suitably using a hydraulic machine having a simplified configuration.

A power generating apparatus according some embodiments is the one described in claim 11, and the renewable energy is wind energy.

According to the power generating apparatus described above, it is possible to generate electric power from wind energy by suitably using a hydraulic machine having a simplified configuration.

According to some embodiments of the present invention, it is possible to switch a spool valve by a simplified configuration in which at least a part of hydraulic pressures which act on each pressure-receiving surface of the spool is standardized. Further, by making the standardized pressure acting on each pressure-receiving surface larger than pressure of the low pressure oil line, it is possible to increase speed of movement of the spool and the accompanying switching of hydraulic pressure of the pressure-switching target chamber.

BRIEF DESCRIPTION OF DRAWINGS

FIG. 1 is a schematic diagram of a configuration of a wind turbine generating apparatus according to some embodiments.

FIG. 2 is a schematic diagram of a configuration of a hydraulic motor according to some embodiments.

FIG. 3 is a hydraulic circuit diagram of a spool valve assembly according to some embodiments.

FIG. 4 is a schematic cross-sectional view of a spool valve assembly.

FIG. 5 is a schematic cross-sectional view of a spool valve assembly.

FIG. 6A is a schematic perspective view of a first spool and FIG. 6B is a schematic perspective view of a sleeve.

FIG. 7A is a schematic perspective view of a first end wall, and FIG. 7B is a schematic perspective view of a second end wall.

FIG. 8 is a schematic cross-sectional view of a switching valve according to some embodiments.

FIG. 9 is a schematic cross-sectional view of a switching valve according to some embodiments.

FIG. 10A is a chart for explaining an operation flow of each part of the switching valve upon a shift of a two-port solenoid valve from a closed state to an opened state, and FIG. 10B is a chart for explaining an operation flow of each part of the switching valve upon a shift of the two-port solenoid valve from an opened state to a closed state.

FIG. 11 is a hydraulic circuit diagram of a spool valve assembly according to some embodiments.

FIG. 12 is a hydraulic circuit diagram of a spool valve assembly according to some embodiments.

FIG. 13 is a schematic cross-sectional view of a spool valve assembly.

FIG. 14 is a schematic cross-sectional view of a spool valve assembly.

FIG. 15 is a schematic cross-sectional view of a spool valve assembly.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiments, a power generating apparatus according to some embodiments of the present invention will be described by an example illustrating a wind turbine generating apparatus which generates electric power from wind energy as renewable energy. However, as a generating apparatus, the present invention may be applied to other renewable energy generating apparatuses such as a tidal current generating apparatus, an ocean current generating apparatus, and a river current generating apparatus.

(Wind turbine generating apparatus)

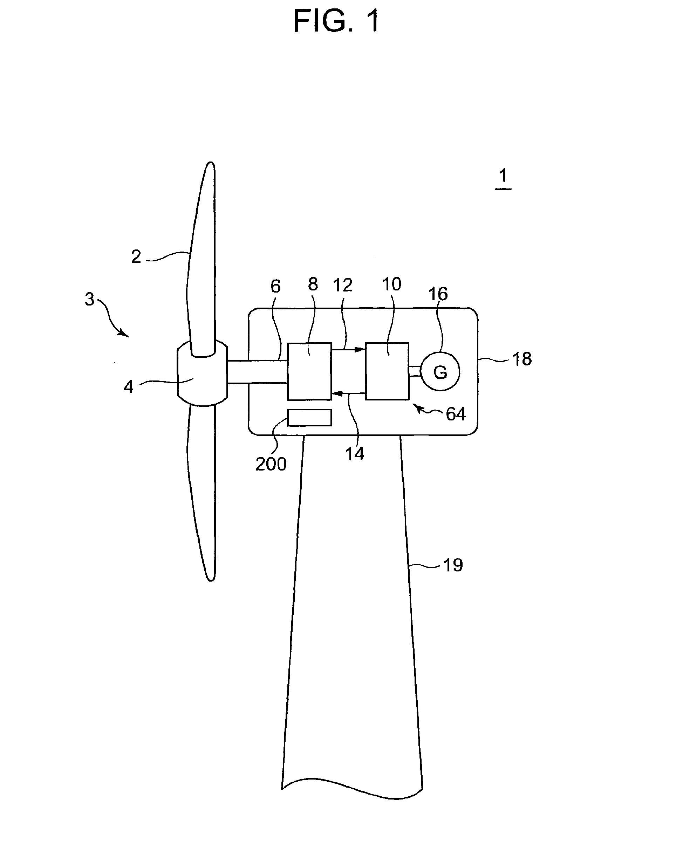

FIG. 1 is a schematic diagram of a wind turbine generating apparatus according to some embodiments. A wind turbine generating apparatus 1 illustrated in FIG. 1 includes a rotor 3 having at least one blade 2 and a hub 4. The rotor 3 and a rotational shaft 6 (main shaft) coupled to the rotor 3 are configured to be rotated by wind energy received by the blade 2.

To the rotor 3 of the wind turbine generating apparatus illustrated in FIG. 1, a hydraulic pump 8 is coupled via the rotational shaft 6. To the hydraulic pump 8, a hydraulic motor 10 is connected via a low pressure oil line 14 and a high pressure oil line 12. Specifically, an outlet of the hydraulic pump 8 is connected to an inlet of the hydraulic motor 10 via the high pressure oil line 12, and an inlet of the hydraulic pump 8 is connected to an outlet of the hydraulic motor 10 via the low pressure oil line 14. The hydraulic pump 8 is driven by the rotational shaft 6 to increase pressure of operating oil, thereby producing high-pressure operating oil (pressurized oil). The pressurized oil produced by the hydraulic pump 8 is supplied to the hydraulic motor 10 via the high pressure oil line 12 to drive the hydraulic motor 10. The low-pressure operating oil after having performed work in the hydraulic motor 10 is returned again to the hydraulic pump 8 through the low pressure oil line 14 disposed between the outlet of the hydraulic motor 10 and the inlet of the hydraulic pump 8.

A generator 16 is coupled to the hydraulic motor 10. In one embodiment, the generator 16 is a synchronous generator connected to a utility grid and driven by the hydraulic motor 10.

Here, at least a part of the rotational shaft 6 is covered by a nacelle 18 disposed on a tower 19. In one embodiment, the hydraulic pump 8, the hydraulic motor 10 and the generator 16 are disposed inside the nacelle 18.

In the wind turbine generating apparatus 1 illustrated in FIG. 1, rotational energy of the rotor 3 is inputted into the generator 16 via a hydraulic transmission 64 being a hydraulic machine including the hydraulic pump 8 and the hydraulic motor 10, so that electric power is generated in the generator 16.

Operation of each device making up the wind turbine generating apparatus 1 is controlled by a control part 200.

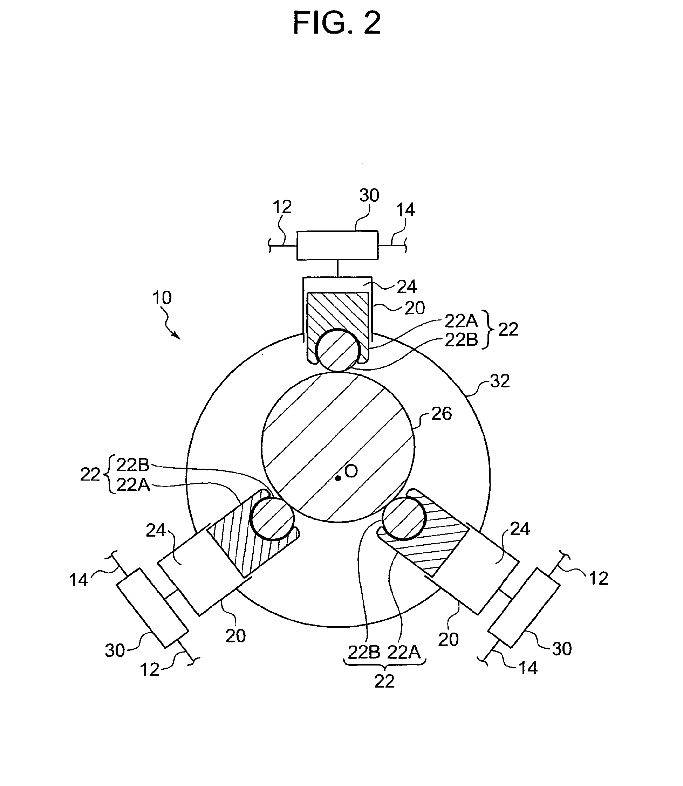

FIG. 2 is a schematic diagram for describing a configuration of the hydraulic motor 10.

As illustrated in FIG. 2, the hydraulic motor 10 includes a plurality of hydraulic chambers 24 each formed by a cylinder 20 and a piston 22, a cam 26 having a cam curved surface which is configured to be in contact with the pistons 22, spool valve assemblies 30 each provided for corresponding one of the hydraulic chambers 24, a high pressure oil line 12, and a low pressure oil line 14.

From the perspective of converting vertical reciprocating motion of the pistons 22 into rotational motion of the cam 26 smoothly, each piston 22 may include a piston body 22A which slides inside a corresponding cylinder 20, a piston roller or a piston shoe which is attached to the piston body 22A to be in contact with the cam curved surface of the cam 26. Here, FIG. 2 illustrates an example in which a piston 22 includes a piston body 22A and a piston roller 22B.

The cam 26 is an eccentric cam which is eccentric with respect to an axial center O of a rotational shaft (crank shaft) 32 of the hydraulic motor 10 connected to the generator 16. While the piston 22 completes a single vertical reciprocal motion, the cam 26 and the rotational shaft 32 to which the cam 26 is attached complete a single rotation.

In other embodiments, the cam 26 is an annular multi-lobed cam (ring cam) having a plurality of lobes (convex portions). In this case, while the cam 26 and the rotational shaft 32 to which the cam 26 is attached complete a single rotation, the piston 22 completes vertical reciprocal motions of a number equal to the number of the lobes.

Each spool valve assembly 30 is configured to switch pressure of the hydraulic chamber 24 between pressure of the high pressure oil line 12 and pressure of the low pressure oil line 14 by switching from the first state where the hydraulic chamber 24 is in communication with the high pressure oil line 12 to the second state where the hydraulic chamber 24 is in communication with the low pressure oil line 14, vice versa. That is, the spool valve assembly 30 serves as a switching unit for switching pressure of the hydraulic chamber 24 being a pressure-switching target chamber.

(Spool valve assembly)

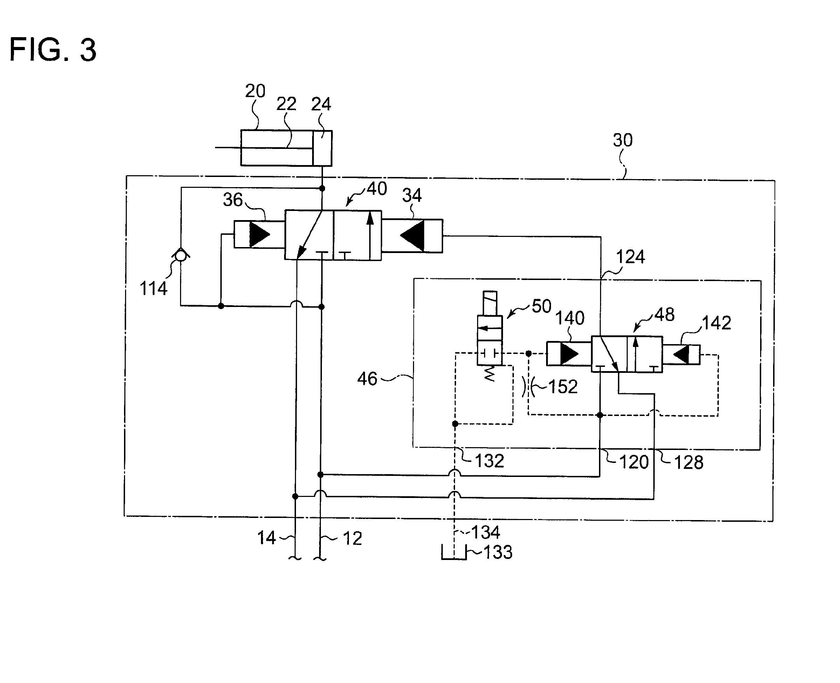

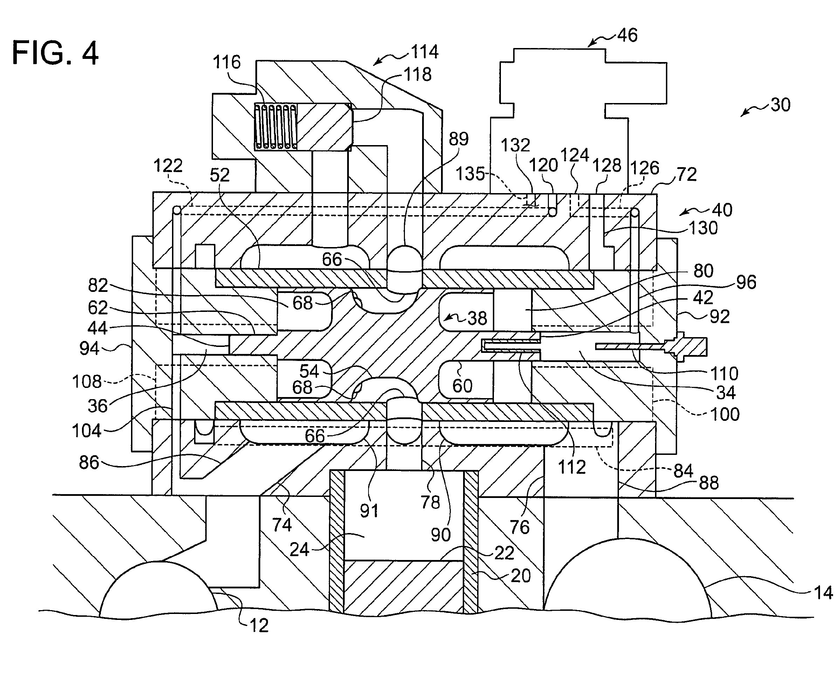

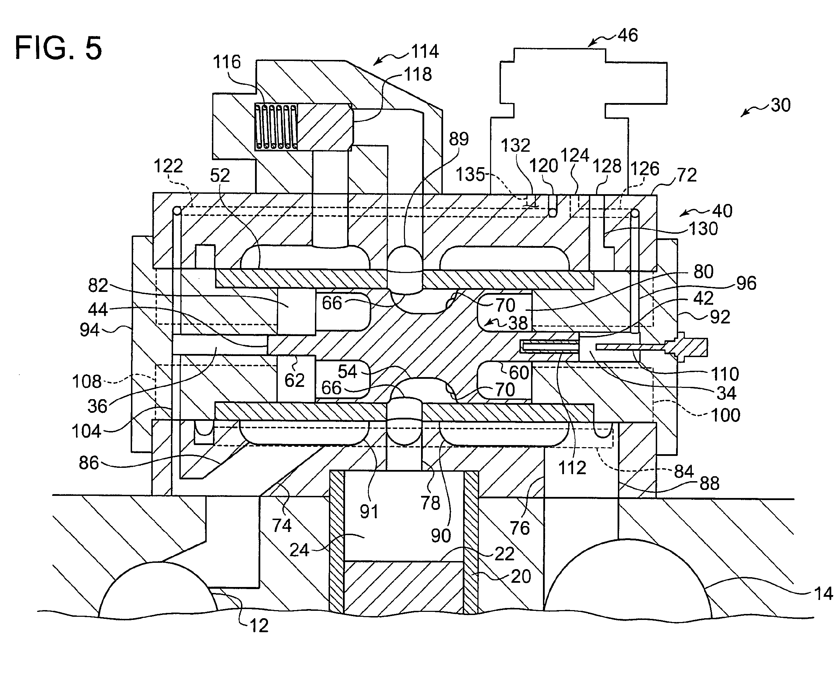

Next, an exemplary configuration of the spool valve assembly 30 will be described in reference to FIGs. 3 to 5. FIG. 3 is a schematic hydraulic circuit diagram of the spool valve assembly 30. FIG. 4 is a schematic cross-sectional view of the spool valve assembly 30 illustrated in FIG. 3, illustrating the first state where the hydraulic chamber 24 is in communication with the high pressure oil line 12. FIG. 5 illustrates the spool valve assembly 30 of FIG. 4 in the second state where the hydraulic chamber 24 is in communication with the low pressure oil line 14.

The spool valve assembly 30 illustrated in FIGs. 3 to 5 has a large spool valve 40 including a first chamber 34, a second chamber 36, and a large spool 38. The large spool 38 includes a first pressure-receiving surface 42 formed so as to receive hydraulic pressure of the first chamber 34 and a second pressure-receiving surface 44 formed so as to receive hydraulic pressure of the second chamber 36. The area of the second pressure-receiving surface 44 is smaller than that of the first pressure-receiving surface 44.

The large spool valve 40 is configured to move the large spool 38 to switch between the first state and the second state (switch pressure of the hydraulic chamber 24 being a pressure-switching target chamber) by switching hydraulic pressure of the first chamber 34 between pressure $P_{2a}$ that is higher than pressure of the low pressure oil line and pressure $P_{1a}$ that is lower than the pressure $P_{2a}$, while maintaining hydraulic pressure of the second chamber 36 at the pressure $P_{2a}$.

As described above, the area of the second pressure-receiving surface 44 of the large spool 38 is smaller than the area of the first pressure-receiving surface 42. Thus, in a case where the standardized pressure $P_{2a}$ is applied to each of the first pressure-receiving surface 42 and the second pressure-receiving surface 44, the first pressure-receiving surface 42 receives a force larger than the force the second pressure-receiving surface 44 receives. On the other hand, in a case where pressure $P_{1a}$ smaller than pressure $P_{2a}$ is applied to the first pressure-receiving surface 42 in the state where the pressure $P_{2a}$ is being applied to the second pressure-receiving surface 44, if the pressure difference between the pressure $P_{2a}$ and the pressure $P_{1a}$ is large enough, it is possible to make the force received by the first pressure-receiving surface 42 smaller than the force received by the second pressure-receiving surface 44.

Accordingly, by switching hydraulic pressure of the first chamber 34 between pressure $P_{2a}$ and pressure $P_{1a}$ which is smaller than the pressure $P_{2a}$ while maintaining hydraulic pressure of the second chamber 36 at the pressure $P_{2a}$, it is possible to switch between the first state where the hydraulic chamber 24 is in communication with the high pressure oil line 12 and the second state where the hydraulic chamber 24 is in communication with the low pressure oil line 14 (switch hydraulic pressure of the hydraulic chamber 24 being a pressure-switching target chamber), by a simplified configuration in which one of hydraulic pressures which act on the first pressure-receiving surface 42 and hydraulic pressure which acts on the second pressure-receiving surface 44 are standardized. Further, by making the standardized pressure $P_{2a}$ which acts on the first pressure-receiving surface 42 and the second pressure-receiving surface 44 larger than the pressure of the low pressure oil line, it is possible to increase speed of movement of the large spool 38 and the accompanying switching of hydraulic pressure in the hydraulic chamber 24.

Here, the spool valve assembly 30 illustrated in FIGs. 3 to 5 utilizes the pressure of the high pressure oil line 12 included inherently in the hydraulic machine as the standardized pressure $P_{2a}$ for the first pressure-receiving surface 42 and the second pressure-receiving surface 44, as described below. Also, it utilizes the pressure of the low pressure oil line 14 included inherently in the hydraulic machine as the pressure $P_{1a}$. As a result, it is possible to switch between the first state and the second state with a simplified configuration.

Here, in order to make the force received by the first pressure-receiving surface 42 smaller than the force received by the second pressure-receiving surface 44 as described above, the area of each pressure-receiving surface 42, 44 and pressures $P_{1a}$, $P_{2a}$ may be set such that a product of the area of the first pressure-receiving surface 42 and the pressure $P_{1a}$ is smaller than a product of the area of the second pressure-receiving surface 44 and the pressure $P_{2a}$.

It is desirable that the large spool valve 40 is configured to satisfy a relationship of

$$0.7 \leqq \frac{S_{2a}}{S_{1a}} \cdot \frac{2P_{2a}}{P_{1a} + P_{2a}} \leqq 1.3$$

, where the area of the first pressure-receiving surface 42 is $S_{1a}$, and the area of the second pressure-receiving surface 44 is $S_{2a}$ in the large spool 38 illustrated in FIG. 4.

As a result, the resultant force of the force the large spool 38 receives from hydraulic pressure of the first chamber 34 and the force the large spool 38 receives from hydraulic pressure of the second chamber 36 becomes substantially equal between the time when the pressure $P_{1a}$ is applied and the time when the pressure $P_{2a}$ is applied to the first pressure-receiving surface 42 (directions of the resultant forces are opposite). Accordingly, it is possible to make the responsiveness of the large spool 38 substantially equal between the case where hydraulic pressure of the first chamber 34 is switched from $P_{1a}$ to $P_{2a}$ and the case where it is switched from $P_{2a}$ to $P_{1a}$.

It is possible to move the large spool 38 by utilizing only the net force caused by hydraulic pressure. In other embodiments, in addition to the net force caused by hydraulic pressure, it is possible to use other forces such as spring force. In this case, for instance, the second pressure-receiving surface 44 may be biased by a spring (not illustrated) toward a direction in which the first pressure-receiving surface 42 resists the pressure from the first chamber 34, and then the area of each pressure-receiving surface, pressures $P_{1a}$, $P_{2a}$ and the setting pressure of the spring may be set such that a product of the area of the first pressure-receiving surface 42 and the pressure $P_{1a}$ is smaller than a resultant force of a product of the area of the second pressure-receiving surface 44 and the pressure $P_{2a}$ and the biasing force of the spring.

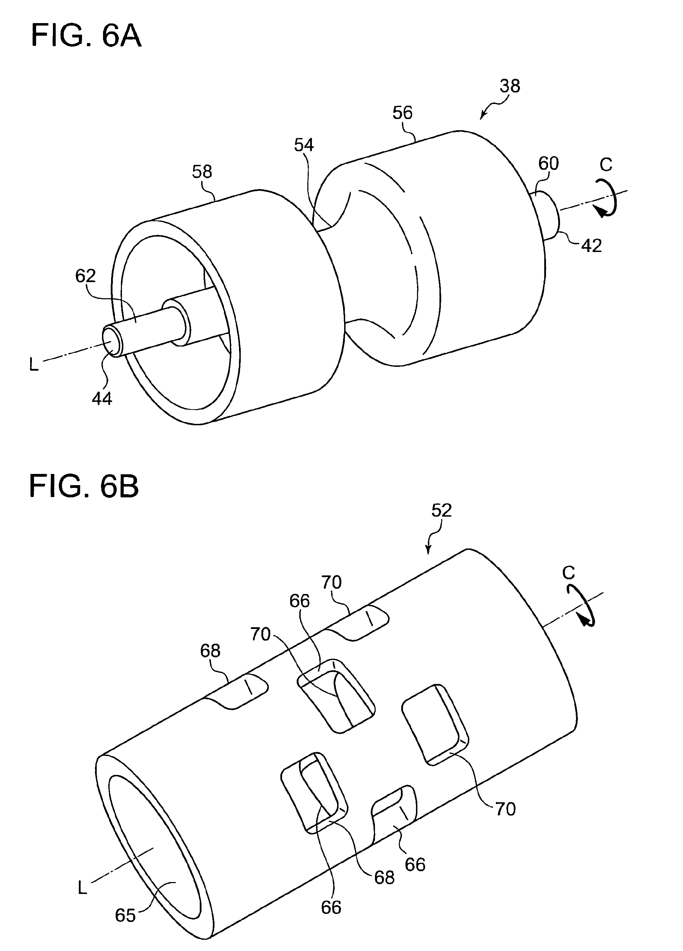

The large spool valve 40 illustrated in FIG. 4 includes a sleeve 52 which houses the large spool 38. Now the detailed configurations of the large spool 38 and the sleeve 52 will be described in reference to FIG. 6A and FIG. 6B.

FIG. 6A is a schematic perspective view of the large spool 38, and FIG. 6B is a schematic perspective view of the sleeve 52.

As illustrated in FIG. 6A, the large spool 38 includes an annular groove 54, a first land portion 56, a second land portion 58, a first piston portion 60, and a second piston portion 62, all of which are integrally formed. The annular groove 54 is disposed on the center part of the large spool 39 in the axial direction L of the large spool 38 (hereinafter, unless otherwise recited, "axial direction" means the axial direction L of the large spool 38, i.e., the axial direction L of the sleeve 52). The first and second land portions 56, 58 are disposed adjacent to the annular groove 54 so as to sandwich the annular groove 54. The large spool 38 is configured such that each land portion 56, 58 reciprocates in the axial direction with respect to the inner circumferential surface 65 (see FIG. 6B) of the sleeve 52.

Here, the above described first pressure-receiving surface 42 is an end surface of the first piston portion 60, and the second pressure-receiving surface 44 is an end surface of the second piston portion 62. Each of the first and second piston portions 60, 62 of the large spool 38 has a substantially cylindrical shape. The large spool 38 is configured such that the outer diameter of the second piston portion 62 is smaller than the outer diameter of the first piston portion 60 in order to make the area of the second pressure-receiving surface 44 smaller than the area of the first pressure-receiving surface 42.

As illustrated in FIG. 6B, the sleeve 52 includes a plurality of hydraulic chamber ports 66 (output ports) which communicate with the hydraulic chamber 24 (see FIG. 4), a plurality of high-pressure ports 68 which communicate with the high pressure oil line 12 (see FIG. 4), and a plurality of low-pressure ports 70 which communicate with the low pressure oil line 14 (see FIG. 4). The plurality of hydraulic-chamber ports 66 are formed on the same position in the axial direction and with equal intervals in the circumferential direction C (hereinafter, unless otherwise stated, "circumferential direction" indicates the circumferential direction C of the sleeve, i.e., the circumferential direction C of the large spool 38). Further, the plurality of high-pressure ports 68 are formed on the same position in the axial direction and with equal intervals in the circumferential direction. Similarly, the plurality of low-pressure ports 70 are formed on the same position in the axial direction and with equal intervals in the circumferential direction. The position in the circumferential direction of the high-pressure ports 68 is the same as that of the low-pressure ports 70. The position in the circumferential direction of the hydraulic chamber ports 66 is off the positions in the circumferential direction of the high-pressure ports 68 and the low-pressure ports 70.

The state of the spool valve assembly 30 illustrated in FIG 4 is the first state where the high-pressure ports 68 are in communication with the hydraulic chamber ports 66 through the annular groove 54 and thereby the high pressure oil line 12 is brought into communication with the hydraulic chamber 24. On the other hand, the state of the spool valve assembly 30 illustrated in FIG. 5 is the second state where the low-pressure ports 70 are in communication with the hydraulic chamber ports 66 through the annular groove 54 and thereby the low pressure oil line 14 is brought into communication with the hydraulic chamber 24.

As illustrated in FIG. 4, the large spool valve 40 includes a casing 72 which houses the sleeve 52.

The casing 72 illustrated in FIG. 4 includes a high pressure communication path 74 configured to bring the high-pressure ports 68 and the high pressure oil line 12 into communication, a low pressure communication path 76 configured to bring the low-pressure ports 70 and the low pressure oil line 14 into communication, and a hydraulic chamber communication path 78 configured to bring the hydraulic chamber ports 66 and the hydraulic chamber 24 into communication.

Accordingly, the above described first state illustrated in FIG. 4 is achieved by a path being formed between the high pressure oil line 12 and the hydraulic chamber 24 by the high pressure communication path 74, the high-pressure ports 68, the annular groove 54, the hydraulic chamber ports 66, and the hydraulic chamber communication path 78. Further, the above described second state illustrated in FIG. 5 is achieved by a path being formed between the low pressure oil line 14 and the hydraulic chamber 24 by the low pressure communication path 76, the low-pressure ports 70, the annular groove 54, the hydraulic chamber ports 66, and the hydraulic chamber communication path 78.

The large spool valve 40 illustrated in FIG. 4 includes a first drain chamber 80 on the side of one end of the large spool 38 in the axial direction and a second drain chamber 82 on the side of the other end thereof. The first drain chamber 80 and the second drain chamber 82 are in communication with each other through a first drain flow path 84 disposed inside the casing 72.

As described above, as the first drain chamber 80 and the second drain chamber 82 are in communication with each other through the first drain flow path 84 disposed inside the casing 72, pressure of the first drain chamber 80 and pressure of the second drain chamber 82 are always equal regardless of the position of the large spool 38. Accordingly, There may be no pressure difference caused between the first drain chamber 80 and the second drain chamber 82, and thus movement and position of the large spool 38 may not be affected by such a pressure difference. As a result, it is possible to control operation of the large spool 38 more securely by hydraulic pressure of the first chamber 34 and the second chamber 36.

Here, the high pressure communication path 74 illustrated in FIG. 4 includes an inclined hole part 86 which is inclined with respect to the radial direction of the sleeve 52 so as to avoid the first drain flow path 84, in order to bring the high-pressure ports 68 closer to the center in the axial direction with respect to the high pressure oil line 12 to realize a compact large spool valve 40 while preventing the high pressure communication path 74 from intervening the drain flow path 84.

On the other hand, the low pressure communication path 76 includes a simple vertical hole part 88 which extends in the radial direction of the sleeve 52, because there may be no problem in that the low pressure oil line 14 communicates with the drain flow path 84 when pressure of the low pressure oil line 14 is equal to that of the drain flow path 84. Further, in order to bring the low-pressure ports 70 closer to the center in the axial direction with respect to the low pressure oil line 14 to achieve a compact large spool valve 40, the low pressure communication path 76 is formed such that the length in the axial direction of a sleeve-side opening 90 (annular flow path) of the low pressure communication path 76 is longer than the length in the axial direction of a sleeve-side opening 91 (annular flow path) of the high pressure communication path 74.

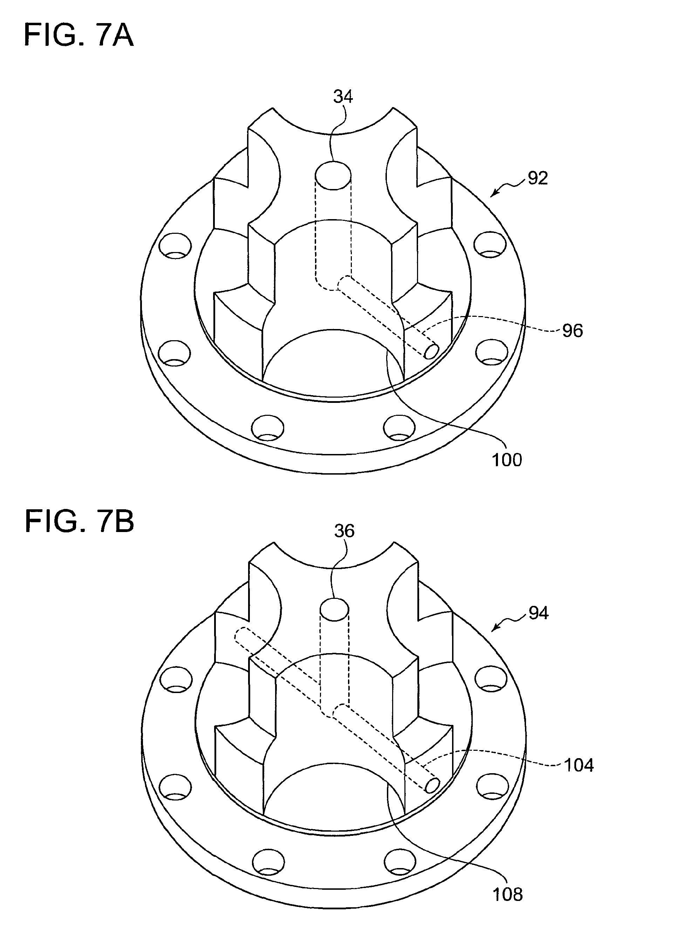

The large spool valve 40 illustrated in FIG. 4 includes a first end wall 92 disposed on the side of one end of the sleeve 52 and a second end wall 94 disposed on the side of the other end of the sleeve. FIG. 7A is a schematic perspective view of the first end wall 92, and FIG. 7B is a schematic perspective view of the second end wall 94.

The first end wall 92 illustrated in FIGs. 4 and 7A includes a first end wall flow path 96 inside thereof. The first end wall flow path 96 selectively communicates to either the high pressure oil line 12 being a hydraulic line having the pressure $P_{2a}$ or the low pressure oil line 14 being a hydraulic line having the pressure $P_{1a}$ in accordance with the switching of the switching valve 46. The first end wall flow path 96 includes the first chamber 34 disposed along the axial direction, and is configured such that the first piston portion 60 included in the large spool 38 slides with respect to the inner circumferential face of the first chamber 34. The first end wall 92 includes a plurality of cut-outs 100 formed in the circumferential direction at equal intervals.

The second end wall 94 included in FIGs. 4 and 7B includes a second end wall flow path 104 inside thereof which is configured to be constantly in communication with the high pressure oil line 12. The second end wall flow path 104 includes a second chamber 36 disposed along the axial direction, and is configured such that the second piston portion 62 included in the large spool 38 is configured to slide with respect to the inner circumferential face of the second chamber 36. The second end wall 94 includes a plurality of cut-outs 108 formed in the circumferential direction at equal intervals.

The first drain chamber 80 illustrated in FIG. 4 is formed between the first end wall 92 and the large spool 38, while the second drain chamber 82 is formed between the second end wall 94 and the large spool 38. In the above described first state, the first drain chamber 80 is formed by being surrounded by the end wall 92, the sleeve 52, and the large spool 38. In the above described second state, the second drain chamber 82 is formed by being surrounded by the second end wall 94, the sleeve 52, and the large spool 38. The first drain chamber 80 and the second drain chamber 82 illustrated in FIG. 4 are in communication with each other through the cut-outs 100 of the first end wall 92, the first drain flow path 84 disposed in the casing 72, and the cut-outs 108 of the second end wall 94. Further, the drain flow path 84 is in communication with the low pressure oil line 14. As described above, it is possible to bring the first drain chamber 80 into communication with the first drain flow path 84 by a simple configuration by providing the cut-outs 100, while enhancing sealability against oil of the large spool valve 40 by the first end wall 92 disposed on the side of one end of the sleeve 52 in the axial direction. Further, it is possible to bring the second drain chamber 82 into communication with the second first drain flow path 84 by a simple configuration by providing the cut-outs 108, while enhancing sealability against oil of the large spool valve 40 by the second end wall 94 disposed on the side of the other end of the sleeve 52 in the axial direction.

The large spool valve 40 illustrated in FIG.4 includes a sensor 110 for detecting displacement of the large spool 38 in the axial direction. The sensor 110 is disposed on the first chamber 34. In this manner, the sensor 110 for detecting displacement of the large spool 38 is disposed on the first chamber 34, which is likely to have a relatively large space corresponding to the first pressure-receiving surface 42 having an area larger than that of the second pressure-receiving surface 44. As a result, layout of the sensor 110 is facilitated.

Here, as a sensor 110, a displacement sensor of an eddy-current type may be used. In this case, the sensor 110 is a coil sensor and high-frequency signals of about a few MHz are supplied to the sensor 110 from an oscillator circuit which is not illustrated in the drawings. When the distance between the sensor 110 and a copper tube 112 being a target metal illustrated in FIG. 4 changes while the high-frequency signals are being supplied to the sensor 110, eddy current on the surface of the copper tube 112 varies in response to the change in the distance.

Thus, it is possible to detect the displacement of the large spool 38 from the change in the impedance of the sensor 110 caused by the change in the eddy current.

The spool valve assembly 30 illustrated in FIG. 4 includes a relief valve 114. The relief valve 114 includes a spring 116 and a poppet valve 118 which is biased by the spring 116, and is configured such that the poppet valve 118 opens to bring the hydraulic chamber 24 into communication with the high pressure oil line 12 when pressure of the hydraulic chamber 24 exceeds a setting pressure which is not lower than pressure of the high pressure oil line 12. In a case where powders or the like included in the oil (e.g. metal powders) have gotten stuck inside the large spool valve 40 and operation of the large spool 38 is stopped, the large spool 38 being positioned so that the hydraulic chamber 24 is in communication with neither of the high pressure oil line 12 nor the low pressure oil line 14 may cause the pressure of the hydraulic chamber 24 to increase considerably as the piston 22 ascends. Here, by providing the relief valve 114, it is possible to maintain pressure of the hydraulic chamber 24 within a setting pressure even in the case where the large spool 38 is shutdown as described above.

Further, the casing 72 illustrated in FIG. 4 includes an annular flow path 89. The annular flow path 89 is formed circumferentially around the sleeve 52 (around the annular groove 54) at the same position as that of the hydraulic chamber ports 66 in the axial direction of the large spool 38 (the same position as that of the hydraulic chamber communication path 78). Further, the annular flow path 89 is positioned at a position that allows the annular flow path 89 to be always in communication with the annular groove 54 regardless of the position of the large spool 38. As a result, it is possible to establish a good communicating state between the relief valve 114 and the hydraulic chamber 24 through the annular groove 54 and the annular flow path 89.

Here, in a case where a plurality of hydraulic chambers 24 are arranged along the axial direction of a hydraulic motor 10 of a radial piston type, a plurality of spool valve assemblies 30 would also be arranged along the axial direction of the hydraulic motor 10. In this case, from the perspective of preventing the intervention among the spool valve assemblies 30 arranged adjacent to one another in the axial direction of the hydraulic motor 10, it is desirable to dispose the relief valve 114 and the switching valve 46 on the radially outer side of the hydraulic motor 10 with respect to the large spool valve 40 as illustrated in FIG 4.

The casing 72 illustrated in FIG. 4 includes a high pressure supply path 122, a selective supply path 126, a low pressure supply path 130, and a communication path 135. The high pressure supply path 122 is formed between the second end wall flow path 104 and a high-pressure port 120 of the switching valve 46, which will be described below, so as to supply high pressure oil having the pressure $P_{2a}$ to the high-pressure port 120 from the high pressure oil line 12. The selective supply path 126 is formed between an output port 124 of the switching valve 46 and the first end wall flow path 96 so as to selectively supply or collect high pressure oil having the pressure $P_{2a}$ and low pressure oil having the pressure $P_{1a}$ to the first chamber 34 from the output port 124. The low pressure supply path 130 is formed between a low-pressure port 128 of the switching valve 46 and the low pressure communication path 76 so as to supply low pressure oil having the pressure $P_{1a}$ to the low-pressure port 128 from the low pressure oil line 14. The communication path 135 brings a discharge port 132 of the switching valve 46 into communication with a drain line 134 (see FIG. 3) included in the hydraulic transmission 64. Further, for the drain line 134 illustrated in FIG. 3, the hydraulic transmission communicates with a drain tank 133, so that the high pressure oil discharged from the discharge port 132 is introduced to the drain tank 133 through the communication path 135 and the drain line 134.

(Switching valve)

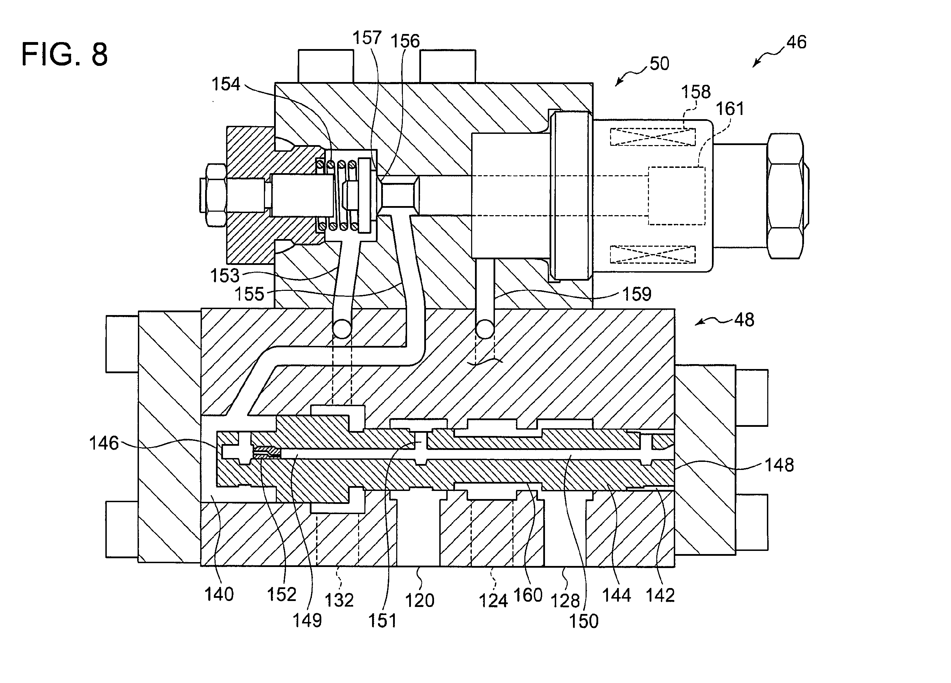

Next, the switching valve 46 will be described in reference to FIGs. 3 and 8. FIG. 8 is a schematic cross-sectional view of the switching valve 46 according to some embodiments.

The switching valve 46 functions as a switching unit for switching hydraulic pressure of the first chamber 34 (see FIGs. 3 and 4) being a pressure-adjusting target chamber from the pressure $P_{2a}$ to the pressure $P_{1a}$, vice versa.

The switching valve 46 includes a small spool valve 48 and a two-port solenoid valve 50 for operating the small spool valve 48.

As a result, compared to a configuration in which hydraulic pressure of the first chamber 34 of the large spool valve 40 is switched between the pressure $P_{2a}$ and the pressure $P_{1a}$ by a solenoid valve alone without using the small spool valve 48, it is possible to increase a flow rate of the oil which can be used for the switching.

Further, in the wind turbine generating apparatus 1 illustrated in FIG. 1, it is necessary to switch between the above described first state and second state of the spool valve assembly 30 at high speed in accordance with the high-speed rotation of the synchronous generator 16. In this case, by increasing the flow rate of the oil which can be used for the switching by using the small spool valve 48 and the two-port solenoid valve 50, it is possible to realize high-speed switching between the first state and the second state.

The small spool valve 48 illustrated in FIGs. 3 and 8 includes a low-pressure port 128 which communicates with the low pressure oil line 14, a high-pressure port 120 which communicates with the high pressure oil line 12, and an output port 124 which communicates the first chamber 34 being a pressure-switching target chamber. The small spool valve 48 is configured to switch hydraulic pressure of the first chamber 34 of the large spool valve 40 between the pressure $P_{1a}$ and the pressure $P_{2a}$ by switching a port which is in communication with the output port 124 from the high-pressure port 120 to the low-pressure port 128, vice versa.

The small spool valve 48 includes a first chamber 140, a second chamber 142, and a small spool 144. The small spool 144 includes a first pressure-receiving surface 146 formed so as to receive hydraulic pressure of the first chamber 140 and a second pressure-receiving surface 148 formed so as to receive hydraulic pressure of the second chamber 142 and have an area smaller than that of the first pressure-receiving surface 146.

The small spool valve 48 is configured to move the small spool 144 to switch hydraulic pressure of the first chamber 34 (see FIG. 4) being a pressure-switching target chamber between the pressure $P_{1a}$ and the pressure $P_{2a}$ by switching hydraulic pressure of the first chamber 140 between pressure $P_{2b}$ which is larger than pressure of the low pressure oil line 14 and pressure $P_{1b}$ which is smaller than the pressure $P_{2b}$ while maintaining pressure of the second chamber 142 at pressure the $P_{2b}$.

As described above, the area of the second pressure-receiving surface 148 of the small spool 144 is smaller than the area of the first pressure-receiving surface 146. Thus, in a case where a standardized pressure $P_{2b}$ is applied to each of the first pressure-receiving surface 146 and the second pressure-receiving surface 148, the first pressure-receiving surface 146 receives a force larger than the force received by the second pressure-receiving surface 148. On the other hand, in a case where the pressure $P_{1b}$ smaller than the pressure $P_{2b}$ is applied to the first pressure-receiving surface 146 in the state where the pressure $P_{2b}$ is applied to the second pressure-receiving surface 148, it is possible to make the force received by the first pressure-receiving surface 146 smaller than the force received by the second pressure-receiving surface 148 by setting the pressure $P_{1b}$ appropriately.

Accordingly, by switching hydraulic pressure of the first chamber 140 between the pressure $P_{2b}$ and the pressure $P_{1b}$ which is smaller than pressure $P_{2b}$ while maintaining hydraulic pressure of the second chamber 142 at the pressure $P_{2b}$, it is possible to switch hydraulic pressure of the first chamber 34 (a pressure-adjusting target chamber) of the large spool valve 40 by a simplified configuration in which one of hydraulic pressures which act on the first pressure-receiving surface 146 and hydraulic pressure which acts on the second pressure-receiving surface 148 are standardized. Further, by using the pressure of the high pressure oil line 12 inherently included in the hydraulic transmission 64 being a hydraulic machine as a standardized pressure $P_{2b}$ which acts on the first pressure-receiving surface 146 and the second pressure-receiving surface 148, it is possible to switch hydraulic pressure of the first chamber 34 of the large spool valve 40 by a simplified configuration. Still further, by making the standardized pressure $P_{2n}$ which

acts on the first pressure-receiving surface 146 and the second pressure-receiving surface 148 larger than the pressure of the low pressure oil line, it is possible to increase speed of the movement of the small spool 144 and the accompanying switching of hydraulic pressure of the first chamber 34 of the large spool valve 40.

Here, the switching valve 46 illustrated in FIGs. 3 and 8 utilizes the pressure of the high pressure oil line 12 included inherently in the hydraulic transmission 64 as the standardized pressure $P_{2a}$ for the first pressure-receiving surface 146 and the second pressure-receiving surface 148. Also, it utilizes the pressure of the drain line 134 communicating with the drain tank 133 (substantially the atmospheric pressure) as the pressure $P_{1a}$. As a result, it is possible to realize the switching of pressure of the first chamber 34 of the large spool valve 40 and the accompanying switching between the first state and the second state by a simplified configuration. Here, the standardized hydraulic pressure $P_{2b}$ is the pressure of the high pressure oil line 12, which is equal to the above mentioned pressure $P_{2b}$.

Further, the first pressure-receiving surface 146 in FIG. 8 indicates any surface facing the first chamber 140 among the end surfaces of the small spool 144 in the axial direction of the small spool 144. Also, the second pressure-receiving surface 148 in FIG. 8 indicates any surface facing the second chamber 142 among the end surfaces of the small spool 144 in the axial direction of the small spool 144.

Still further, in order to make the force received by the first pressure-receiving surface 146 smaller than the force received by the second pressure-receiving surface 148 as described above, for instance, the area of each pressure-receiving surface 146, 148 and the pressures $P_{1b}$, $P_{2b}$ may be set such that a product of the area of the first pressure-receiving surface 146 and the pressure $P_{1b}$ is smaller than a product of the area of the second pressure-receiving surface 148 and the pressure $P_{2b}$.

Here, It is desirable that the small spool valve 48 is configured to satisfy a relationship of

$$0.7 \leqq \frac{S_{2b}}{S_{1b}} \cdot \frac{2P_{2b}}{P_{1b} + P_{2b}} \leqq 1.3$$

, where the area of the first pressure-receiving surface 146 is $S_{1b}$, and the area of the second pressure-receiving surface 148 is $S_{2b}$ in the small spool 144 illustrated in FIG. 8.

As a result, the resultant force of the force received by the small spool 144 from hydraulic pressure of the first chamber 140 and the force received by the small spool 144 from hydraulic pressure of the second chamber 142, becomes substantially equal between the time when the pressure $P_{1b}$ is applied and the time when the pressure $P_{2b}$ is applied to the first pressure-receiving surface 146 (directions of the resultant forces are opposite). Accordingly, it is possible to make the responsiveness of the small spool 144 substantially equal between the case where hydraulic pressure of the first chamber 140 is switched from $P_{1b}$ to $P_{2b}$ and the case where it is switched from $P_{2b}$ to $P_{1b}$.

In some embodiments, it is possible to move the small spool 144 by utilizing only the net force caused by hydraulic pressure. In other embodiments, in addition to the net force caused by hydraulic pressure, it is possible to use other forces such as spring force. In this case, for instance, the second pressure-receiving surface 148 may be biased by a spring (not illustrated) toward a direction to resist the force received by the first pressure-receiving surface 146, and then the area of each pressure-receiving surface 146, 148, pressures $P_{1a}$, $P_{2a}$ and the biasing force of the spring may be set such that a product of the area of the first pressure-receiving surface 146 and the pressure $P_{1b}$ is smaller than a resultant force of a product of the area of the second pressure-receiving surface 148 and the pressure $P_{2b}$ and the biasing force of the spring.

The spool valve 48 illustrated in FIG. 8 includes a first flow-path part 149 for communicating the high-pressure port 120 with the first chamber 140, and a second flow-path part 150 for communicating the high-pressure port 120 with the second chamber 142. A restriction portion 152 is disposed on the first flow-path part 149. The first flow-path part 149 and the second flow-path part 150 are disposed inside the small spool 144 and branched from a flow path 151 which is in communication with the high-pressure port 120 to be connected to the first chamber 140 and the second chamber 142, respectively.

The switching valve 46 includes a discharge port 132 for discharging high pressure oil inside the first chamber to a drain line 134 included in the hydraulic transmission 64. The discharge port 132 has hydraulic pressure of the pressure $P_{1b}$ (pressure of the drain line 134 herein). The two-port solenoid valve 50 is disposed in a flow path (lines 153, 155) between the first chamber 140 and the discharge port 132. The first chamber 140 and the discharge port 132 are brought into a communicating state with each other through the lines 153, 155 when the two-port solenoid valve 50 opens, and into a non-communicating state with each other when the two-port solenoid valve closes. The second chamber 142 is in communication with the high-pressure port 120 constantly to be maintained at the pressure $P_{2b}$.

The two-port solenoid valve 50 illustrated in FIG. 8 includes a spring 154, a poppet 156, a valve seat 157, a solenoid coil 158 and an armature 161. The two-port solenoid valve 50 illustrated in FIG. 8 is of a normal-close type. When the solenoid coil 158 is energized, the armature 161 is attracted so that the poppet 156 moves in a direction perpendicular to the valve seat 157, resisting the biasing force of the spring 154. As a result, the two-port solenoid valve opens. Here, the two-port solenoid valve 50 may be of a normal-open type. Hydraulic pressure of the first chamber illustrated in FIG. 8 is switched between the pressure $P_{1b}$ and the pressure $P_{2b}$ by the two-port solenoid valve 50 opening and closing.

The state of the switching valve 46 illustrated in FIG. 8 is a state where the two-port solenoid valve 50 is closed, and where the pressure of the first chamber 140 and pressure of the second chamber 142 each equals to the pressure $P_{2b}$, i.e., pressure of the high pressure oil line 12. In this state, the low-pressure port 128 and the output port 124 of the small spool valve 48 are in communication with each other via the annular groove 160 of the small spool 144, i.e., the first chamber 34 (see FIG 4) of the large spool valve 40 is in communication with the low pressure oil line 14. Also in this state, pressure of the first chamber 34 is equal to the pressure $P_{1a}$, i.e., pressure of the low pressure oil line 14.

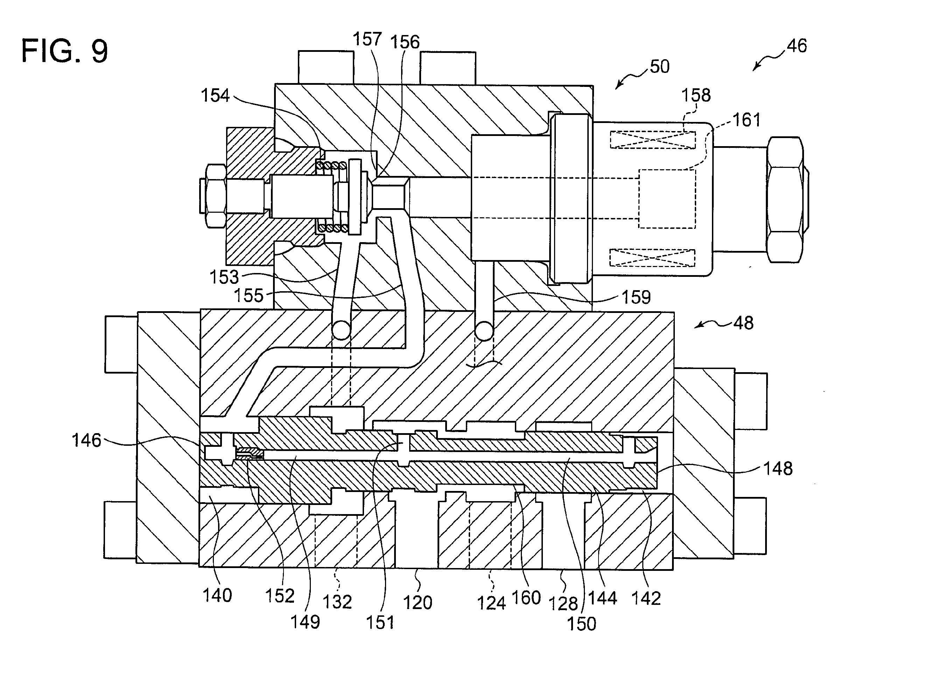

Once the two-port solenoid valve 50 gets out of this state, the discharge port 132 communicates with the first chamber 140 to discharge high pressure oil inside the first chamber 140 out from the discharge port 312. As a result, hydraulic pressure of the first chamber 140 decreases from the pressure $P_{2b}$ (pressure of the high pressure oil line 12 herein) to $P_{1b}$ (pressure of the drain line 134 herein). Thus, a pressure difference is caused between the sides across the restriction portion 152 in the first flow-path part 149. In accordance with the decrease in the pressure of the first chamber 140, the position of the small spool 144 moves in the axial direction from the position illustrated in FIG. 8 to the position illustrated in FIG. 9. In the state of the switching valve 46 illustrated in FIG. 9, the high-pressure port 120 is in communication with the output port 124 through the annular groove 160 of the small spool 144, i.e., the first chamber 34 (see FIG. 4) of the large spool valve 40 is in communication with the high pressure oil line 12. That is, the hydraulic pressure of the first chamber 34 is equal to the pressure $P_{2a}$ (pressure of the high pressure oil line 12 herein).

Once the two-port solenoid valve 50 is closed from this state, due to the high pressure oil that has flowed into the first chamber 140 from the restriction portion 152 in the first flow-path part 149 of the small spool valve 48, hydraulic pressure of the first chamber 140 increases from the pressure $P_{1b}$ (pressure of the drain line 134 herein) to $P_{2b}$ (pressure of the high pressure oil line 12 herein). In accordance with increase in pressure of the first chamber 140, the position of the small spool 144 in the axial direction from the position illustrated in FIG. 9 to the position illustrated in FIG. 8.

According to the switching valve 46 illustrated in FIGs. 8 and 9, it is possible to move the small spool 144 by opening and closing the two-port solenoid valve 50 to switch only hydraulic pressure of the first chamber 140. Thus, compared to a configuration in which hydraulic pressures acting on both end faces of a spool are each changed by using a three-port or four-port solenoid valve to move the spool, it is possible to easily shorten the stroke of a movable part including a valve body of the solenoid valve. As a result, it is possible to improve the responsiveness of the solenoid valve 50 and to increase speed of the accompanying switching of hydraulic pressure of the first chamber 34.

Further, since the two-port solenoid valve 50 is opened and closed by moving the poppet 156 in a direction perpendicular to the valve seat 157, it is possible to further shorten the stroke of the movable part including the valve body of the solenoid valve compared to a configuration in which the three-port or four-port solenoid valve is used. As a result, it is possible to improve the responsiveness of the solenoid valve 50 and to further increase speed of the accompanying switching of hydraulic pressure of the first chamber 34.

Further, since the restriction portion 152 is disposed in the first flow-path part 149 for communicating the high-pressure port 120 with the first chamber 140, it is possible to supply high pressure oil having a flow rate corresponding to the area of the flow path of the restriction portion 152 to the first chamber 140 from the high-pressure port 120 in a case where a pressure difference is caused between the high-pressure port 120 and the first chamber 140. Thus, by setting the area of the flow path of the restriction portion 152 appropriately, it is possible to adjust the timing of switching hydraulic pressure of the first chamber 140 by a simplified configuration.

Here, in the switching valve 46 illustrated in FIG. 8, a communication path 159 which communicates with the drain tank 133 (see FIG. 3) is disposed to prevent back pressure from occurring upon closing the two-port solenoid valve 50.

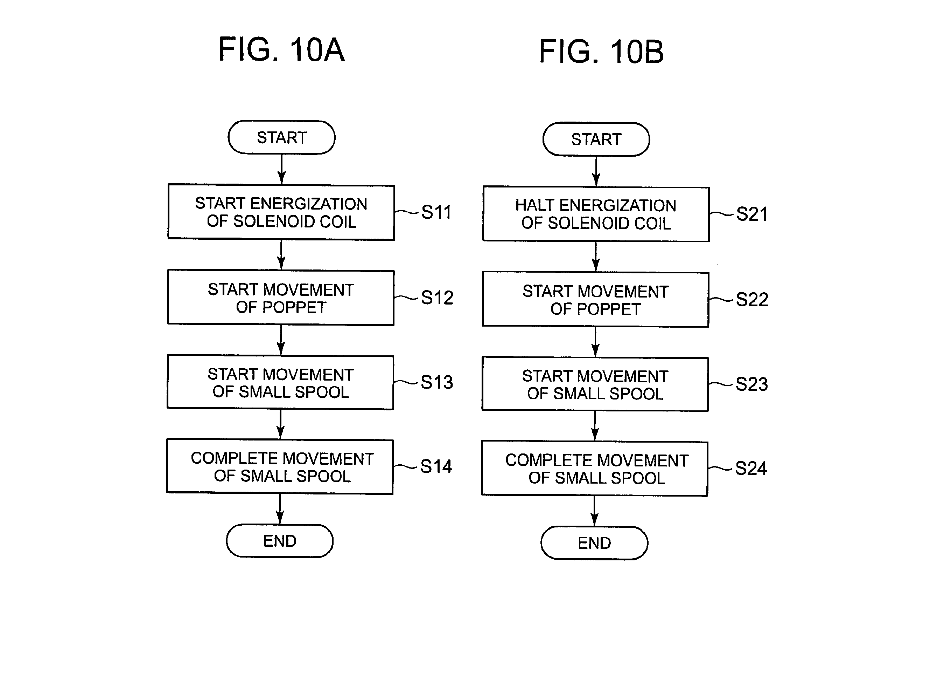

Next, in reference to FIG. 10, the operation flow of each part of the switching valve 46 upon opening and closing of the two-port solenoid valve 50 will be described in more detail.

FIG. 10A is a chart for describing the operation flow of each part of the switching valve 46 upon a shift of the two-port solenoid valve 50 from a closed state (FIG. 8) to an opened state (FIG. 9). As illustrated in FIG. 10A, firstly in S11, energization of the solenoid coil 158 is started. In S12, attracting force acting on the armature 161 from the solenoid coil 158 exceeds the force in the direction to press the poppet 156 against the valve seat 157 including the biasing force of the spring 154, causing the poppet 156 to move away from the valve seat 157. As a result, the pressure of the first chamber 140 of the small spool valve 48 begins to decrease. In S13, the force received by the first pressure-receiving surface 146 of the small spool 144 from hydraulic pressure of the first chamber 140 becomes smaller than the force received by the second pressure-receiving surface 148 from hydraulic pressure of the second chamber 142, causing the small spool 144 to start to move toward the side of the first pressure-receiving surface 146 in the axial direction. In S14, the small spool 144 abuts the wall surface of the first chamber 140 and completes its movement (the state in FIG. 9).

Next, in reference to FIG. 10B, the operation flow of each part of the switching valve 46 upon a shift of the two-port solenoid valve 50 from the opened state (FIG. 9) to the closed state (FIG. 8) will be described.

As illustrated in FIG. 10B, firstly in S21, energization of the solenoid coil 158 is halted. In S22, the biasing force of the spring 154 exceeds the attracting force of the armature 161 caused by residual magnetism remaining in the solenoid coil 158 by a certain amount, causing the poppet 156 to start to move toward the valve seat. In S23, the force received by the first pressure-receiving surface 146 of the small spool 144 from hydraulic pressure of the first chamber 140 exceeds the force received by the second pressure-receiving surface 148 of the small spool 144 from hydraulic pressure of the second chamber 142, causing the small spool 144 to start to move toward the side of the second pressure-receiving face 148 in the axial direction. In S14, the small spool 144 abuts the wall surface of the second chamber 142 and completes its movement (the state in FIG. 8).

Here, the switching valve 46 is configured to satisfy a relationship of

$$0.7 \leq A / B \leq 1.3$$

, where A is a period of time after starting energization of the solenoid coil 158 in S11 and before completing movement of the small spool 144 in S14, and B is a period of time after halting the energization of the solenoid coil 158 in S21 and before completing the movement of the small spool 144 in S 24.

As a result, it becomes possible to equalize the intervals of time in which pressure of the first chamber 34 (pressure-switching target chamber) of the large spool valve 40 is switched. Thus, it is possible to also equalize the intervals of time in which pressure of the hydraulic chamber 24 is switched.

Here, the above A/B can be adjusted by adjusting the diameter of the restriction portion 152, for instance. In the switching valve 46 illustrated in FIG. 8, B becomes shorter and A becomes longer as the diameter of the restriction portion 152 becomes larger, thereby increasing A/B. On the other hand, B becomes longer and A becomes shorter as the diameter of the restriction portion 152 becomes smaller, thereby reducing A/B.

Further, for the spool valve assembly 30 described mainly in reference to FIGs. 3 to 5, a configuration is adopted in which pressure of the low pressure oil line 14 is used as the pressure $P_{1a}$ while pressure of the high pressure oil line 12 is used as the pressure $P_{2a}$. However, a configuration of the spool valve assembly 30 is not limited to this.

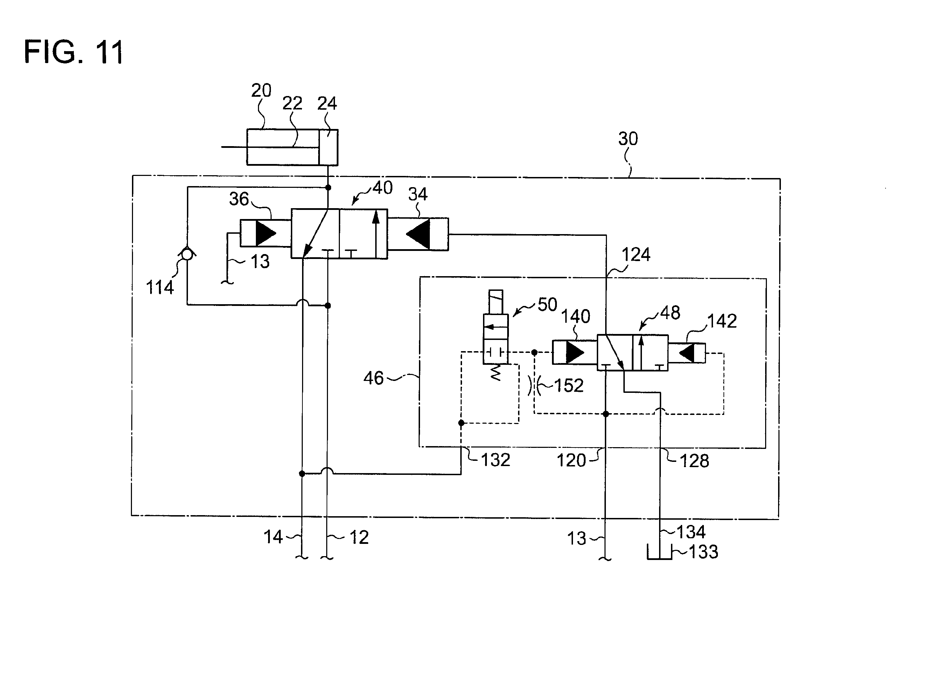

For instance, pressure of the drain line 134 (substantially the atmospheric pressure) may be used as the pressure $P_{1a}$ and pressure of the hydraulic line 13 may be used as the pressure $P_{2a}$. The pressure of the hydraulic line 13 is higher than that of the low pressure oil line 14, and different from that of the high pressure oil line 12. In this case, as illustrated in FIG. 11 for instance, the spool valve assembly 30 may be configured such that the second chamber 36 of the large spool valve 40 communicates with the hydraulic line 13, the high-pressure port 120 of the switching valve 46 communicates with the hydraulic line 13, and the low-pressure port 128 communicates with the drain line 134. The spool valve assembly 30 illustrated in FIG. 11 is configured to switch hydraulic pressure of the first chamber 34 of the large spool valve 40 between the pressure $P_{1a}$ (pressure of the drain line 134 herein) and the pressure $P_{2a}$ (pressure of the hydraulic line 13 herein) by switching a port that communicates with the output port 124 of the switching valve 46 between the high-pressure port 120 and the low-pressure port 128.

In the spool valve assembly 30 illustrated in FIG. 11, it is also possible to switch the first state in which the hydraulic chamber 24 is in communication with the high pressure oil line 12 and the second state in which the hydraulic chamber 24 is in communication with the low pressure oil line 14 (it is possible to switch pressure of the hydraulic chamber 24 being a pressure-switching target chamber) by a simplified configuration in which one of hydraulic pressures which act on the first pressure-receiving surface 42 and hydraulic pressure which acts on the second pressure-receiving surface 44 are standardized. Also, it is possible to increase speed of the movement of the large spool 38 and the accompanying switching of hydraulic pressure of the hydraulic chamber 24 by making the standardized pressure $P_{2a}$ that acts on the first pressure-receiving surface 42 and the second pressure-receiving surface 44 larger than pressure of the low pressure oil line.

Further, in the switching valve 46 described mainly in reference to FIGs. 3 and 8, pressure of the drain line 134 is used as the pressure $P_{1b}$ and pressure of the high pressure oil line 12 is used as the pressure $P_{2b}$. However, a configuration of the switching valve 46 is not limited to this.

For instance, pressure of the low pressure oil line 14 may be used as the pressure $P_{1b}$ and pressure of the hydraulic line 13 may be used as the pressure $P_{2b}$. The pressure of the hydraulic line 13 is higher than that of the low pressure oil line 14, and different from that of the high pressure oil line 12. In this case, as illustrated in FIG. 11 for instance, the switching valve 46 may be configured such that the high-pressure port 120 of the switching valve 46 is in communication with the hydraulic line 13 and the discharge port 132 is in communication with the low pressure oil line 14. In the switching valve 46 illustrated in FIG. 11, the discharge port 132 is configured to discharge high pressure oil of the first chamber 140 of the small spool valve 48 to the low pressure oil line 14, while the two-port solenoid valve 50 is disposed in the flow path between the discharge port 132 and the first chamber 140. In the switching valve 46 illustrated in FIG. 11, as the two-port solenoid valve 50 opens the high pressure oil of the first chamber 140 is discharged from the discharge port 132 so that hydraulic pressure of the first chamber 140 decreases from the pressure $P_{2b}$ (pressure of the hydraulic line 13 herein) to the pressure $P_{1b}$ (pressure of the low pressure oil line 14 herein). As the two-solenoid valve 50 is closed, the high pressure oil which has flowed into the first chamber 140 through the restriction portion 152 from the hydraulic line 13 causes hydraulic pressure of the first chamber 140 to increase from the pressure $P_{1b}$ (pressure of the low pressure oil line 14 herein) toward the pressure $P_{2b}$ (pressure of the hydraulic line 13 herein).

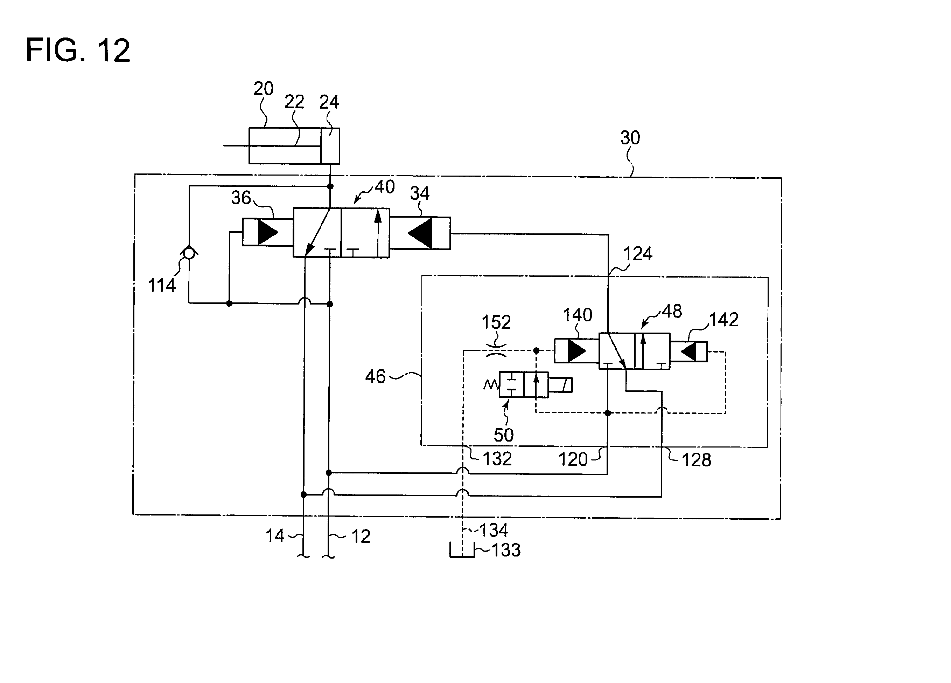

Further, in some embodiments, arrangement of the restriction portion 152 and the two-port solenoid valve 50 illustrated in FIG. 3 may be modified as illustrated in FIG. 12. That is, the two-port solenoid valve 50 may be disposed in a flow path between the high-pressure port 120 and the first chamber 140. Also, the restriction portion 152 may be disposed in a flow path between the first chamber 140 and the discharge port 132.

In the switching valve 46 illustrated in FIG. 12, as the two-solenoid valve 50 opens, the high pressure oil that has flowed into the first chamber 140 from the high pressure oil line 12 causes hydraulic pressure of the first chamber 140 to increase from the pressure $P_{1b}$ (pressure of the drain line 134 herein) to the pressure $P_{2b}$ (pressure of the high pressure oil line 12). As the two-port solenoid valve 50 closes, supply of the high pressure oil to the first chamber is halted, which causes hydraulic pressure of the first chamber 140 to decrease from the pressure $P_{2b}$ (pressure of the high pressure oil line 12 herein) to the pressure $P_{1b}$ (pressure of the drain line 134), in accordance with the high pressure oil of the first chamber 140 being discharged from the discharge port 132 through the restriction portion 152.

In both of the switching valve 46 illustrated in FIG. 11 and the switching valve 46 illustrated in FIG. 12, it is possible to switch hydraulic pressure of the first chamber 34 (pressure-adjusting target chamber) of the large spool valve 40 by a simplified configuration in which one of hydraulic pressures which act on the first pressure-receiving surface 146 and hydraulic pressure which acts on the second pressure-receiving surface 148 are standardized. Further, it is possible to increase speed of the movement of the small spool 144 and the accompanying switching of hydraulic pressure of the first chamber 34 of the large spool valve 40 by making the standardized pressure $P_{2b}$ acting on the first pressure-receiving surface 146 and the second pressure-receiving surface 148 larger than pressure of the low pressure oil line.

Still further, in both of the switching valve 46 illustrated in FIG. 11 and the switching valve 46 illustrated in FIG. 12, it is possible to move the small spool 144 by switching only pressure of the first chamber 140 by opening and closing the two-port solenoid valve 50. Thus, compared to a configuration in which a spool is moved by using a three-port or four-port solenoid valve to change each of the hydraulic pressures acting on the both end faces of the spool, it is possible to easily shorten the stroke required for the switching of the solenoid valve. As a result, it is possible to improve the responsiveness of the solenoid valve 50 and to increase speed of the accompanying switching of hydraulic pressure of the first chamber 34. Further, since the two-port solenoid valve 50 is opened and closed by the movement of the poppet 156 in a direction perpendicular to the valve seat 157 (see FIGs. 8 and 9), it is possible to further shorten the stroke required for switching the solenoid valve compared to a configuration in which the three-port or four-port solenoid valve is used. As a result, it is possible to further improve the responsiveness of the solenoid valve 50 and to increase speed of the accompanying switching of hydraulic pressure of the first chamber 34.

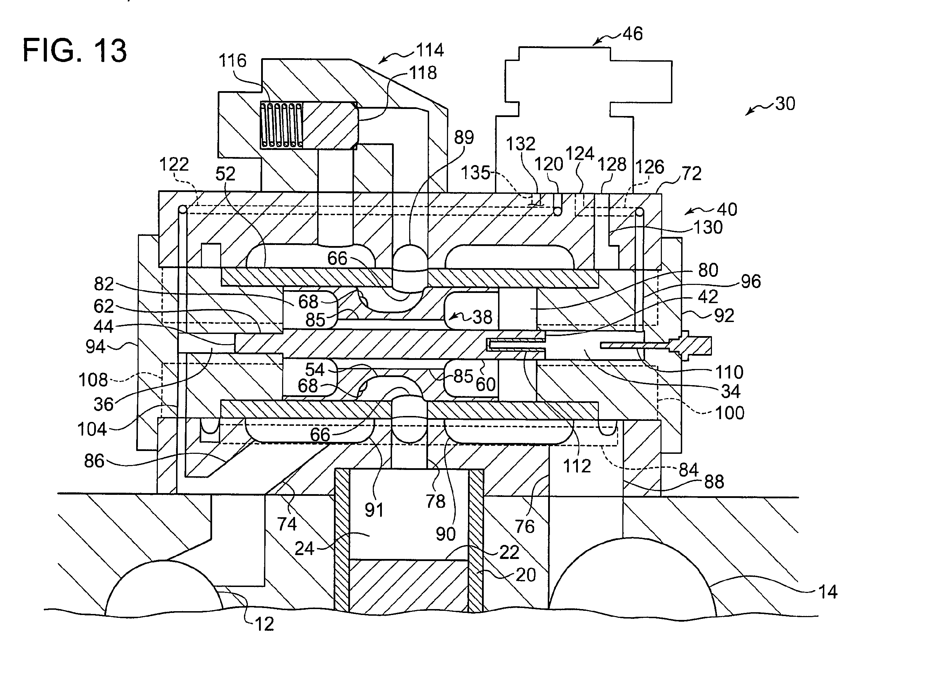

Here, the first drain chamber 80 and the second drain chamber 82 of the large spool valve 40 described in reference to FIG. 4 are configured to communicate with each other through the first drain flow path 84 disposed in the casing 72. In contrast to this, in another embodiment, they may be configured to communicate with each other through the second drain flow path 85 disposed inside the large spool 38 as illustrated in FIG. 13. As a result, it is possible to reduce resistance received from the oil inside the first drain chamber 80 and the second drain chamber 82 upon movement of the large spool 38. Also, as it is possible to reduce weight of the large spool 38, it is possible to improve responsiveness of the large spool valve 40 (i.e., it is possible to improve responsiveness of the spool valve assembly 30). A plurality of second drain flow paths 85 may be provided as illustrated in FIG. 13. Further, the first drain chamber 80 and the second drain chamber 82 may be brought into communication through the second drain flow path alone without the first drain flow path 84 being provided.

Further, the major two of the advantages will be described below as to disposing the sleeve 52 between the large spool 38 and the casing 72 in the large spool valve 40 described in reference to FIG. 4. First, abrasion caused by sliding of the large spool 38 may not affect the casing 72 (it affects only the large spool 38, the sleeve 52, and the first and second end walls 92, 94). Thus, upon replacing the large spool 38 or the like due to abrasion, it may not be necessary to replace the casing 72. Second, cost may be reduced by forming the sleeve 52 which constitutes a sliding portion of the first spool valve as a separate body separate from the casing 72 and providing the sleeve 52 with enhanced hardness and high corrosion resistance as a result of material choice, surface-hardening, etc for the sleeve 52.

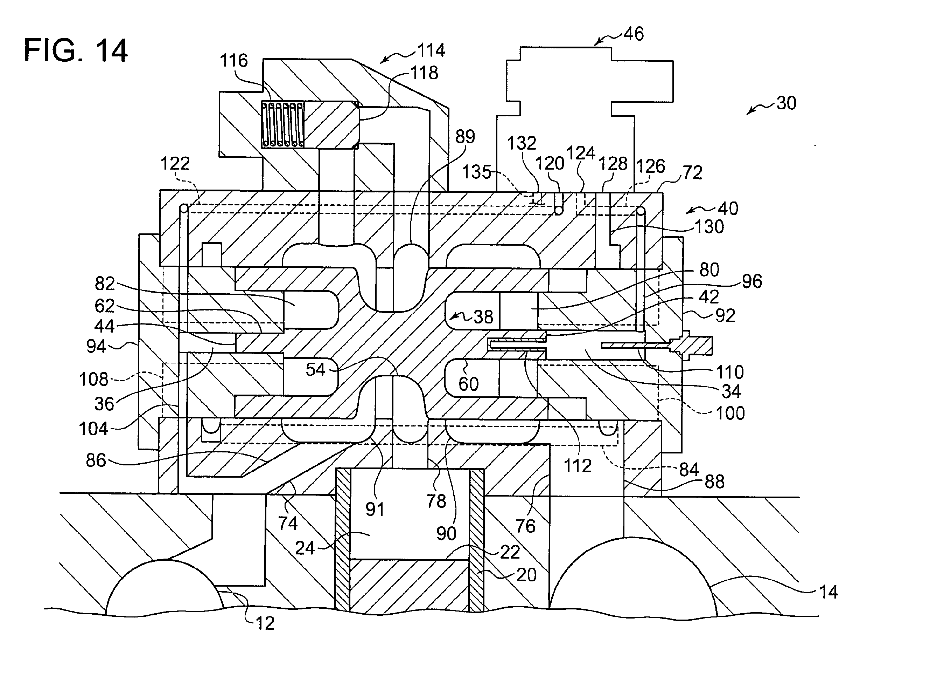

However, the large spool valve 40 may not include the sleeve 52 of FIG. 4, as illustrated in FIG. 14. In this case, the first land portion 56 and the second land portion 58 of the large spool 38 are configured to directly slide with respect to the inner circumferential surface of the casing 72.

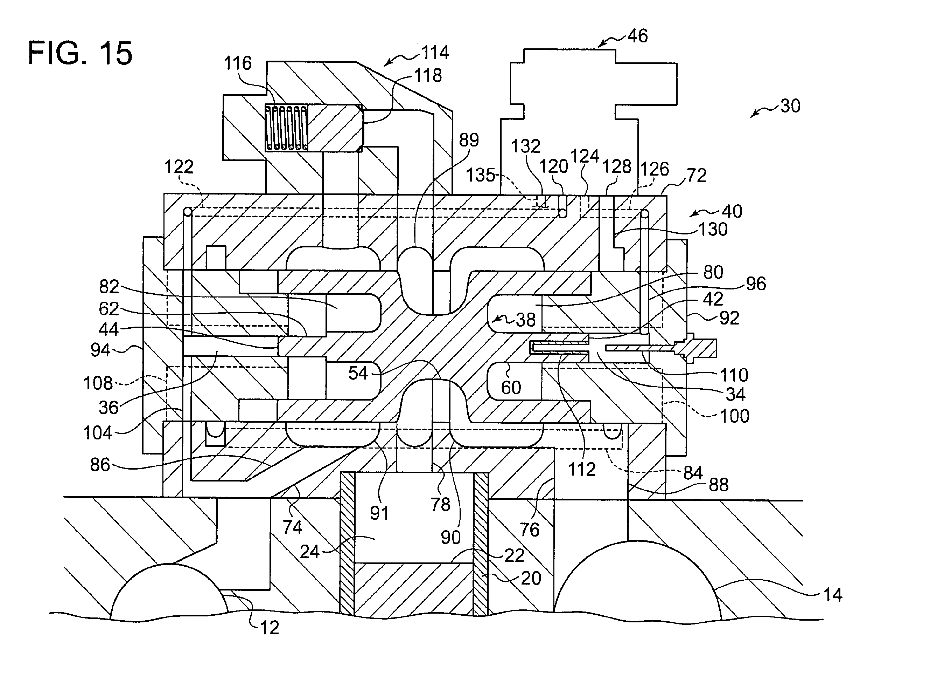

Also in the large spool valve 40 illustrated in FIG. 14, the first state where the high pressure oil line 12 is in communication with the hydraulic chamber 24 (the state illustrated in FIG. 14) is achieved by the high pressure communication path 74 communicating with the hydraulic chamber communication path 78 through the annular groove 54. Also, the second state where the low pressure oil line 14 is in communication with the hydraulic chamber 24 (the state illustrated in FIG. 15) is achieved by the low pressure communication path 76 communicating with the hydraulic chamber communication path 78 through the annular groove 54. The first state is switched to the second state, vice versa, in this case similarly to the case described in reference to FIG. 4 (switching by moving the large spool 38 in its axial direction by utilizing pressures of the first chamber 34 and the second chamber 36).

Here, the casing 72 illustrated in FIG 14 includes the annular flow path 89. The annular flow path 89 is formed around the annular groove 54 in the same position as that of the hydraulic chamber communication path 78 in the axial direction of the large spool 38. Further, the annular flow path 89 is disposed on a position where it is constantly in communication with the annular groove 54 regardless of the position of the large spool 38. As a result, it is possible to establish a good communicating state between the relief valve 114 and the hydraulic chamber 24 through the annular groove 54 and the annular flow path 89.

Further, in the large spool valve 40 illustrated in FIG. 14, the sleeve 52 illustrated in FIG 4 is not interposed between the large spool 38 and the casing 72. By omitting the sleeve 52 including the ports 66, 68, 70 each of which may often cause pressure loss, it is possible to reduce power loss of the spool valve assembly 30. Also, it is possible to easily secure the flow rate between the high pressure oil line 12 and the hydraulic chamber 24 as well as the flow rate between the low pressure oil line 14 and the hydraulic chamber 24.

Still further, in the large spool valve 40 illustrated in FIG. 4, a sealing member (for instance, an O-ring) which is not illustrated in the drawing is disposed between the sleeve 52, the casing 72, the first end wall 92, and the second end wall 94 to block communication between the flow paths that have different pressures. However, in the large spool valve 40 illustrated in FIG. 14, a seal member corresponding to the sleeve 52 may not be required. Accordingly, for the large spool valve 40 illustrated in FIG. 14, compared to a configuration illustrated in FIG. 4, it is possible to reduce the number of components. Thus, reduction of cost and improvement of assembling property may be expected.

## Claims

1. A switching unit (30,46) for switching pressure in a pressure-switching target chamber (24) of a hydraulic machine (10) which includes the pressure-switching target chamber (24), a high pressure oil line (12), and a low pressure oil line (14), the switching unit (30, 46) comprising
a spool valve (40,48) which comprises:

   a first chamber (34,140);
   a second chamber (36,142); and
   a spool (38,144) including a first pressure-receiving surface (42,146) formed so as to receive hydraulic pressure of the first chamber (34,140) and a second pressure-receiving surface (44,148) formed so as to receive hydraulic pressure of the second chamber (36,142), the second pressure-receiving surface (44,148) having an area smaller than that of the first pressure-receiving surface (42,146),

   the spool valve (40,48) being configured to switch the hydraulic pressure of the first chamber (34,140) between pressure $P_2$ which is higher than pressure in the low pressure oil line (14) and pressure $P_1$ which is lower than the pressure $P_2$, while maintaining the hydraulic pressure of the second chamber (36,142) at the pressure $P_2$, so that the spool (38,144) is moved and the pressure in the pressure-switching target chamber (24) is switched,
   wherein the spool valve (40,48) comprises:

   a low-pressure port (70,128) configured to be in communication with a first hydraulic pressure line having the pressure $P_1$;
   a high-pressure port (68,120) configured to be in communication with a second hydraulic line having the pressure $P_2$; and
   an output port (66,124) configured to be in communication with the pressure-switching target chamber (24), and

   wherein a port which is in communication with the output port (66,124) is configured to be switched between the high-pressure port (68,120) and the low-pressure port (70,128), so that the pressure of the pressure-switching target chamber (24) is switched between the pressure $P_1$ and the pressure $P_2$,
   wherein the switching unit (46) further comprising a two-port solenoid valve (50) configured to switch the hydraulic pressure of the first chamber (34) between the pressure $P_1$ and the pressure $P_2$,
   wherein the spool valve (48) comprises a first flow-path part (149) configured to bring the high-pressure port (120) into communication with the first chamber (140) and a second flow-path part (150) configured to bring the high-pressure port (120) into communication with the second chamber (142),
   **characterized in that**
   the first flow-path part (149) and the second flow-path part (150) are disposed inside the spool (38, 144) and branched from a flow path (151) that is configured to communicate with the high-pressure port (120) to connect to the first chamber (140) and the second chamber (142), respectively, and wherein the first flow-path part (149) including a restricting portion (152).

2. The switching unit (30,46) according to claim 1, wherein the first flow-path part (149) is branched from the flow path that is configured to communicate with the high-pressure port (120), and extended through the spool (144) in an axial direction of the spool towards the first pressure-receiving surface (146) so as to be connected to the first chamber (140), and
   the second flow-path part (150) is branched from the flow path (151) that is configured to communicate with the high-pressure port (120), and extended through the spool (144) in the axial direction toward the second pressure-receiving surface (148) so as to be connected to the second chamber (142).

3. The switching unit (30,46) according to claim 1, wherein the first hydraulic line is the low pressure oil line (14) or a drain line (134) included in the hydraulic machine, and
   wherein the second hydraulic line is the high pressure oil line (12).

4. The switching unit (46) according to any one of claims 1 to 3, wherein the first flow-path part (149) comprises:

   an axial flow-path part which is branched from the flow path (151) communicated with the high-pressure port (120), and extended in the axial direction of the spool (144); and
   an intersecting flow-path part which intersects with the axial flow-path part and is connected to the first chamber,
   wherein the restricting portion (152) is disposed in the axial flow-path direction.

5. The switching unit (46) according to claim 1, wherein the two-port solenoid valve (50) includes a valve seat (157) and a poppet (156) configured to move in a perpendicular direction with respect to the valve seat (157), the two-port solenoid valve (50) being configured to be opened and closed in accordance with movement of the poppet (156), so that the hydraulic pressure of the first chamber (34,140) is switched between the pressure $P_1$ and the pressure $P_2$.

6. The switching unit (46) according to any one of claims 1 to 5, further comprising a discharge port (132) configured to discharge high pressure oil inside the first chamber (140) to the drain line (134) or to the low pressure oil line (14) included in the hydraulic machine,

wherein the two-port solenoid valve (50) is disposed in a flow path (153,155) between the first chamber (140) and the discharge port (132),
wherein hydraulic pressure of the discharge port (132) is the pressure $P_1$, and
wherein the spool valve (48) is configured so that:

   the high pressure oil inside the first chamber (140) is discharged from the discharge port (132) to decrease the hydraulic pressure of the first chamber (140) from the pressure $P_2$ toward the pressure $P_1$ upon the two-port solenoid valve (50) being opened; and
   the high pressure oil that has flowed into the first chamber (140) from the restricting portion (152) increases the hydraulic pressure of the first chamber (140) from the pressure $P_1$ toward the pressure $P_2$ upon the two-port solenoid valve (50) being closed.

7. The switching unit (46) according to any one of claims 1 to 6, wherein a relationship of

$$0.7 \leqq A/B \leqq 1.3$$

is satisfied, where A is a period of time after starting energization of a solenoid coil (158) included in the two-port solenoid valve (50) and before completing movement of the spool (144), and B is a period of time after halting the energization of the solenoid coil (158) and before completing the movement of the spool (144).

8. The switching unit (30,46) according to any one of claims 1 to 7, wherein the spool valve (40,48) is configured to satisfy a relationship of

$$0.7 \leqq \frac{S_2}{S_1} \cdot \frac{2 P_2}{P_1 + P_2} \leqq 1.3$$

, where $S_1$ is the area of the first pressure-receiving surface (42,146) and $S_2$ is the area of the second pressure-receiving surface (44,148).

9. A hydraulic machine (10) comprising:

   a pressure-switching target chamber (24);
   a high pressure oil line (12);
   a low pressure oil line (14); and
   a switching unit (30,46) configured to switch pressure of the pressure-switching target chamber (24), wherein the switching unit is the switching unit (30,46) according to any one of claims 1 to 8.

**10.** A power generating apparatus (1) for generating electric power from renewable energy, comprising:

a main shaft (6) configured to rotate utilizing the renewable energy;
a hydraulic machine (10) configured to be driven by rotation of the main shaft (6); and
a generator (16) configured to be driven by the hydraulic machine (10),
wherein the hydraulic machine (10) is the hydraulic machine according to claim 9.

**11.** A power generating apparatus (1) comprising:

at least one blade (2);
a main shaft (6) configured to be rotated by renewable energy received by the at least one blade (2);
a hydraulic machine (10) configured to be driven by rotation of the main shaft (6); and
a generator (16) configured to be driven by the hydraulic machine (10),
wherein the hydraulic machine (10) is the hydraulic machine according to claim 9.

**12.** The power generating apparatus (1) according to claim 11,
wherein the renewable energy is wind energy.

**Patentansprüche**

**1.** Schalteinheit (30, 46) zum Schalten von Druck in einer Druckschaltzielkammer (24) einer hydraulischen Maschine (10), welche die Druckschaltzielkammer (24), eine Hochdrucköl leitung (12) und eine Niederdrucköl leitung (14) umfasst, wobei die Schalteinheit (30, 46) umfasst:

ein Schieberventil (40, 48), das umfasst:

eine erste Kammer (34, 140),
eine zweite Kammer (36, 142), und
einen Schieber (38, 144), der eine erste Druckaufnahmeoberfläche (42, 146), die ausgebildet ist, um Hydraulikdruck der ersten Kammer (34, 140) aufzunehmen, und eine zweite Druckaufnahmeoberfläche (44, 148), die ausgebildet ist, um Hydraulikdruck der zweiten Kammer (36, 142) aufzunehmen, umfasst, wobei die zweite Druckaufnahmeoberfläche (44, 148) eine Fläche aufweist, die kleiner ist als jene der ersten Druckaufnahmeoberfläche (42, 146),

wobei das Schieberventil (40, 48) dazu ausgebildet ist, den Hydraulikdruck der ersten Kammer (34, 140) zwischen Druck $P_2$, der höher ist

als Druck in der Niederdrucköl leitung (14) und Druck $P_1$, der niedriger ist als der Druck $P_2$, umzuschalten, während der Hydraulikdruck der zweiten Kammer (36, 142) auf dem Druck $P_2$ gehalten wird, derart, dass der Schieber (38, 144) bewegt und der Druck in der Druckschaltzielkammer (24) umgeschaltet wird, wobei das Schieberventil (40, 48) umfasst:

einen Niederdruckanschluss (70, 128), der dazu ausgebildet ist, mit einer ersten Hydraulikdruckleitung mit dem Druck $P_1$ in Kommunikation zu sein,
einen Hochdruckanschluss (68, 120), der dazu ausgebildet ist, mit einer zweiten Hydraulikdruckleitung mit dem Druck $P_2$ in Kommunikation zu sein, und
einen Ausgangsanschluss (66, 124), der dazu ausgebildet ist, mit der Druckschaltzielkammer (24) in Kommunikation zu sein, und
wobei ein Anschluss, der mit dem Ausgangsanschluss (66, 124) in Kommunikation ist, dazu ausgebildet ist, zwischen dem Hochdruckanschluss (68, 120) und dem Niederdruckanschluss (70, 128) umgeschaltet zu werden, derart, dass der Druck der Druckschaltzielkammer (24) zwischen dem Druck $P_1$ und dem Druck $P_2$ umgeschaltet wird,
wobei die Schalteinheit (46) ferner ein Zwei-Wege-Magnetventil (50) umfasst, das dazu ausgebildet ist, den Hydraulikdruck der ersten Kammer (34) zwischen dem Druck $P_1$ und dem Druck $P_2$ umzuschalten,
wobei das Schieberventil (48) einen ersten Strömungswegteil (149), der dazu ausgebildet ist, den Hochdruckanschluss (120) mit der ersten Kammer (140) in Kommunikation zu bringen, und einen zweiten Strömungswegteil (150), der dazu ausgebildet ist, den Hochdruckanschluss (120) mit der zweiten Kammer (142) in Kommunikation zu bringen, umfasst,
**dadurch gekennzeichnet, dass**
der erste Strömungswegteil (149) und der zweite Strömungswegteil (150) innerhalb des Schiebers (38, 144) angeordnet sind und von einem Strömungsweg (151) abzweigen, der dazu ausgebildet ist, mit dem Hochdruckanschluss (120) zu kommunizieren, um mit der ersten Kammer (140) bzw. der zweiten Kammer (142) verbunden zu werden, und
wobei der erste Strömungswegteil (149) einen Beschränkungsabschnitt (152) umfasst.

**2.** Schalteinheit (30, 46) nach Anspruch 1, wobei der erste Strömungswegteil (149) von dem Strömungsweg abzweigt, der dazu ausgebildet ist, mit dem Hochdruckanschluss (120) zu kommunizieren, und sich durch den Schieber (144) in einer axialen Richtung des Schiebers in Richtung der ersten Druckaufnahmeoberfläche (146) erstreckt, um mit der ersten Kammer (140) verbunden zu sein, und der zweite Strömungswegteil (150) von dem Strömungsweg (151) abzweigt, der dazu ausgebildet ist, mit dem Hochdruckanschluss (120) zu kommunizieren, und sich durch den Schieber (144) in der axialen Richtung in Richtung der zweiten Druckaufnahmeoberfläche (148) erstreckt, um mit der zweiten Kammer (142) verbunden zu sein.

**3.** Schalteinheit (30, 46) nach Anspruch 1, wobei die erste Hydraulikleitung die Niederdrucköllleitung (14) oder eine Ablaufleitung (134) ist, die in der hydraulischen Maschine enthalten sind, und wobei die zweite Hydraulikleitung die Hochdrucköllleitung (12) ist.

**4.** Schalteinheit (46) nach einem beliebigen der Ansprüche 1 bis 3, wobei der erste Strömungswegteil (149) umfasst:

> einen axialen Strömungswegteil, der von dem Strömungsweg (151), welcher mit dem Hochdruckanschluss (120) kommuniziert, abzweigt und sich in der axialen Richtung des Schiebers (144) erstreckt, und
> einen kreuzenden Strömungswegteil, der den axialen Strömungswegteil kreuzt und mit der ersten Kammer verbunden ist, wobei der Beschränkungsabschnitt (152) in der axialen Strömungswegrichtung angeordnet ist.

**5.** Schalteinheit (46) nach Anspruch 1, wobei das Zwei-Wege-Magnetventil (50) einen Ventilsitz (157) und einen Ventilkegel (156), der dazu ausgebildet ist, sich in senkrechter Richtung in Bezug auf den Ventilsitz (157) zu bewegen, umfasst, wobei das Zwei-Wege-Magnetventil (50) dazu ausgebildet ist, gemäß der Bewegung des Ventilkegels (156) geöffnet und geschlossen zu werden, derart, dass der Hydraulikdruck der ersten Kammer (34, 140) zwischen dem Druck $P_1$ und dem Druck $P_2$ umgeschaltet wird.

**6.** Schalteinheit (46) nach einem beliebigen der Ansprüche 1 bis 5, ferner umfassend:

> einen Abführanschluss (132), der dazu ausgebildet ist, Hochdrucköl innerhalb der ersten Kammer (140) zu der Ablaufleitung (134) oder zu der Niederdrucköllleitung (14), die in der hydraulischen Maschine enthalten sind, abzuführen,

wobei das Zwei-Wege-Magnetventil (50) in einem Strömungsweg (153, 155) zwischen der ersten Kammer (140) und dem Ablaufanschluss (132) angeordnet ist, wobei Hydraulikdruck des Abführanschlusses (132) der Druck $P_1$ ist und wobei das Schieberventil (48) derart ausgebildet ist, dass:

> das Hochdrucköl innerhalb der ersten Kammer (140) von dem Abführanschluss (132) abgeführt wird, um den Hydraulikdruck der ersten Kammer (140) von dem Druck $P_2$ in Richtung des Drucks $P_1$ zu senken, nachdem das Zwei-Wege-Magnetventil (50) geöffnet wird, und
> das Hochdrucköl, das von dem Beschränkungsabschnitt (152) in die erste Kammer (140) gestr

 ömt ist, den Hydraulikdruck der ersten Kammer (140) von dem Druck $P_1$ in Richtung des Drucks $P_2$ erhöht, nachdem das Zwei-Wege-Magnetventil (50) geschlossen wird.

**7.** Schalteinheit (46) nach einem beliebigen der Ansprüche 1 bis 6, wobei eine Beziehung

$$0,7 \leq A/B \leq 1,3$$

erfüllt wird, wobei A ein Zeitraum nach Beginn der Erregung einer Magnetspule (158), die in dem Zwei-Wege-Magnetventil (50) enthalten ist, und vor Abschluss der Bewegung des Schiebers (144) ist und B ein Zeitraum nach Anhalten der Erregung der Magnetspule (158) und vor Abschluss der Bewegung des Schiebers (144) ist.

**8.** Schalteinheit (30, 46) nach einem beliebigen der Ansprüche 1 bis 7, wobei das Schieberventil (40, 48) dazu ausgebildet ist, eine Beziehung

$$0,7 \leq \frac{s_2}{s_1} \cdot \frac{2P_2}{P_1 + P_2} \leq 1,3$$

zu erfüllen, wobei $S_1$ die Fläche der ersten Druckaufnahmeoberfläche (42, 146) und $S_2$ die Fläche der zweiten Druckaufnahmeoberfläche (44, 148) ist.

**9.** Hydraulische Maschine (10), umfassend:

> eine Druckschaltzielkammer (24),
> eine Hochdrucköllleitung (12),
> eine Niederdrucköllleitung (14), und
> eine Schalteinheit (30, 46), die dazu ausgebildet ist, Druck der Druckschaltzielkammer (24) umzuschalten, wobei die Schalteinheit die Schalteinheit (30, 46) nach einem beliebigen der Ansprüche 1 bis 8 ist.

10. Stromerzeugungsvorrichtung (1) zum Erzeugen von elektrischem Strom aus erneuerbarer Energie, umfassend:

eine Hauptwelle (6), die dazu ausgebildet ist, sich durch Nutzung der erneuerbaren Energie zu drehen,
eine hydraulische Maschine (10), die dazu ausgebildet ist, durch Drehung der Hauptwelle (6) angetrieben zu werden, und
einen Generator (16), der dazu ausgebildet ist, durch die hydraulische Maschine (10) angetrieben zu werden,
wobei die hydraulische Maschine (10) die hydraulische Maschine nach Anspruch 9 ist.

11. Stromerzeugungsvorrichtung (1), umfassend:

mindestens ein Rotorblatt (2),
eine Hauptwelle (6), die dazu ausgebildet ist, durch erneuerbare Energie, mit der das mindestens eine Rotorblatt (2) beaufschlagt wird, gedreht zu werden,
eine hydraulische Maschine (10), die dazu ausgebildet ist, durch Drehung der Hauptwelle (6) angetrieben zu werden, und
einen Generator (16), der dazu ausgebildet ist, durch die hydraulische Maschine (10) angetrieben zu werden,
wobei die hydraulische Maschine (10) die hydraulische Maschine nach Anspruch 9 ist.

12. Stromerzeugungsvorrichtung (1) nach Anspruch 11, wobei die erneuerbare Energie Windenergie ist.

**Revendications**

1. Unité de commutation (30, 46) destinée à commuter une pression dans une chambre de cible de commutation de pression (24) d'une machine hydraulique (10) qui comprend la chambre de cible de commutation de pression (24), une conduite d'huile à haute pression (12), et une conduite d'huile à basse pression (14), l'unité de commutation (30, 46) comportant
une soupape à tiroir (40, 48) qui comporte :

une première chambre (34, 140) ;
une deuxième chambre (36, 142) ; et
un tiroir (38, 144) comprenant une première surface de réception de pression (42, 146) formée de façon à recevoir une pression hydraulique de la première chambre (34, 140) et une deuxième surface de réception de pression (44, 148) formée afin de recevoir la pression hydraulique de la deuxième chambre (36, 142), la deuxième surface de réception de pression (44, 148) ayant une surface plus petite que la première surface de réception de pression (42, 146),
la soupape à tiroir (40, 48) étant configurée pour commuter la pression hydraulique de la première chambre (34, 140) entre une pression $P_2$ qui est plus grande qu'une pression dans la conduite d'huile à basse pression (14) et une pression $P_1$ qui est plus basse que la pression $P_2$, tout en maintenant la pression hydraulique de la deuxième chambre (36, 142) à la pression $P_2$, de telle sorte que le tiroir (38, 144) est déplacé et la pression dans la chambre de cible de commutation de pression (24) est commutée, la soupape à tiroir (40, 48) comportant :

un orifice à basse pression (70, 128) configuré pour être en communication avec une première conduite de pression hydraulique ayant la pression $P_1$ ;
un orifice à haute pression (68, 120) configuré pour être en communication avec une deuxième conduite hydraulique ayant la pression $P_2$ ; et
un orifice de sortie (66, 124) configuré pour être en communication avec la chambre de cible de commutation de pression (24), et
dans laquelle un orifice qui est en communication avec l'orifice de sortie (66, 124) est configuré pour être commuté entre l'orifice à haute pression (68, 120) et l'orifice à basse pression (70, 128), de telle sorte que la pression de la chambre de cible de commutation de pression (24) est commutée entre la pression $P_1$ et la pression $P_2$,
dans laquelle l'unité de commutation (46) comporte en outre une électrovanne à deux orifices (50) configurée pour commuter la pression hydraulique de la première chambre (34) entre la pression $P_1$ et la pression $P_2$,
dans laquelle la soupape à tiroir (48) comporte une première partie de passage d'écoulement (149) configurée pour amener l'orifice à haute pression (120) en communication avec la première chambre (140) et une deuxième partie de passage d'écoulement (150) configurée pour amener l'orifice à haute pression (120) en communication avec la deuxième chambre (142),
**caractérisée en ce que**
la première partie de passage d'écoulement (149) et la deuxième partie de passage d'écoulement (150) sont disposées à l'intérieur du tiroir (38, 144) et partent d'un passage d'écoulement (151) qui est configuré pour communiquer avec l'orifice à haute pression (120) pour se raccorder à la première chambre (140) et à la deuxième chambre (142), respectivement, et

dans laquelle la première partie de passage d'écoulement (149) comprend une partie de limitation (152).

2. Unité de commutation (30, 46) selon la revendication 1,

dans laquelle la première partie de passage d'écoulement (149) part du passage d'écoulement qui est configuré pour communiquer avec l'orifice à haute pression (120), et s'étend à travers le tiroir (144) dans une direction axiale du tiroir vers la première surface de réception de pression (146) de façon à être reliée à la première chambre (140), et

la deuxième partie de passage d'écoulement (150) part du passage d'écoulement (151) qui est configuré pour communiquer avec l'orifice à haute pression (120), et s'étend à travers le tiroir (144) dans la direction axiale vers la deuxième surface de réception de pression (148) de façon à être reliée à la deuxième chambre (142).

3. Unité de commutation (30, 46) selon la revendication 1

dans laquelle la première conduite hydraulique est la conduite d'huile à basse pression (14) ou une conduite de vidange (134) incluse dans la machine hydraulique, et

dans laquelle la deuxième conduite hydraulique est la conduite d'huile à haute pression (12).

4. Unité de commutation (46) selon l'une quelconque des revendications 1 à 3, dans laquelle la première partie de passage d'écoulement (149) comporte :

une partie de passage d'écoulement axiale qui part du passage d'écoulement (151) en communication avec l'orifice à haute pression (120), et s'étend dans la direction axiale du tiroir (144) ; et une partie de passage d'écoulement d'intersection qui coupe la partie de passage d'écoulement axiale et est reliée à la première chambre, dans laquelle la partie de limitation (152) est disposée dans la direction axiale de passage d'écoulement.

5. Unité de commutation (46) selon la revendication 1, dans laquelle l'électrovanne à deux orifices (50) comprend un siège de soupape (157) et un clapet (156) configuré pour se déplacer une direction perpendiculaire au siège de soupape (157), l'électrovanne à deux orifices (50) étant configurée pour être ouverte et fermée en fonction du mouvement du clapet (156), de telle sorte que la pression hydraulique de la première chambre (34, 140) est commutée entre la pression $P_1$ et la pression $P_2$.

6. Unité de commutation (46) selon l'une quelconque des revendications 1 à 5, comportant en outre un orifice de refoulement (132) configuré pour refouler de l'huile à haute pression à l'intérieur de la première chambre (140) vers la conduite de vidange (134) ou la conduite d'huile à basse pression (14) incluse dans la machine hydraulique,

dans laquelle l'électrovanne à deux orifices (50) est disposée dans un passage d'écoulement (153, 155) entre la première chambre (140) et l'orifice de refoulement (132),

dans laquelle la pression hydraulique de l'orifice de refoulement (132) est la pression $P_1$, et

dans laquelle la soupape à tiroir (48) est configurée de telle sorte que :

l'huile à haute pression à l'intérieur de la première chambre (140) est refoulée par l'orifice de refoulement (132) pour diminuer la pression hydraulique de la première chambre (140) de la pression $P_2$ vers la pression $P_1$ lorsque l'électrovanne à deux orifices (50) est ouverte ; et l'huile à haute pression qui s'est écoulée dans la première chambre (140) depuis la partie de limitation (152) augmente la pression hydraulique de la première chambre (140) de la pression $P_1$ vers la pression $P_2$ lorsque l'électrovanne à deux orifices (50) est fermée.

7. Unité de commutation (46) selon l'une quelconque des revendications 1 à 6, dans laquelle une relation $0{,}7 \leq A/B \leq 1{,}3$ est satisfaite,

où A est une durée après avoir commencé l'excitation d'une bobine de solénoïde (158) incluse dans l'électrovanne à deux orifices (50) et avant de terminer un mouvement du tiroir (144), et B est une durée après avoir arrêté l'excitation de la bobine de solénoïde (158) et avant de terminer le mouvement du tiroir (144).

8. Unité de commutation (30, 46) selon l'une quelconque des revendications 1 à 7, dans laquelle la soupape à tiroir (40, 48) est configurée pour satisfaire une relation

$$0{,}7 \leq \frac{S_2}{S_1} \cdot \frac{2P_2}{P_1 + P_2} \leq 1{,}3$$

où $S_1$ est la surface de la première surface de réception de pression (42, 146) et $S_2$ est la surface de la deuxième surface de réception de pression (44, 148).

**9.** Machine hydraulique (10) comportant :

une chambre de cible de commutation de pression (24) ;
une conduite d'huile à haute pression (12) ;
une conduite d'huile à basse pression (14) ; et
une unité de commutation (30, 46) configurée pour commuter une pression de la chambre de cible de commutation de pression (24), dans laquelle l'unité de commutation est l'unité de commutation (30, 46) selon l'une quelconque des revendications 1 à 8.

**10.** Appareil de génération d'énergie (1) destiné à générer de l'énergie électrique à partir d'une énergie renouvelable, comportant :

un arbre principal (6) configuré pour tourner en utilisant l'énergie renouvelable ;
une machine hydraulique (10) configurée pour être entraînée par la rotation de l'arbre principal (6) ; et
une génératrice (16) configurée pour être entraînée par la machine hydraulique (10),
dans lequel la machine hydraulique (10) est la machine hydraulique selon la revendication 9.

**11.** Appareil de génération d'énergie (1) comportant :

au moins une pale (2) ;
un arbre principal (6) configuré pour être entraîné en rotation par l'énergie renouvelable reçue par la au moins une pale (2) ;
une machine hydraulique (10) configurée pour être conduit par la rotation de l'arbre principal (6) ; et
une génératrice (16) configurée pour être entraînée par la machine hydraulique (10),
dans lequel la machine hydraulique (10) est la machine hydraulique selon la revendication 9.

**12.** Appareil de génération d'énergie (1) selon la revendication 11, dans lequel l'énergie renouvelable est de l'énergie éolienne.

# FIG. 1

EP 2 871 371 B1

# FIG. 2

23

FIG. 3

FIG. 4

EP 2 871 371 B1

FIG. 5

## FIG. 6A

## FIG. 6B

## FIG. 7A

## FIG. 7B

FIG. 8

FIG. 9

FIG. 10A

START → START ENERGIZATION OF SOLENOID COIL (S11) → START MOVEMENT OF POPPET (S12) → START MOVEMENT OF SMALL SPOOL (S13) → COMPLETE MOVEMENT OF SMALL SPOOL (S14) → END

FIG. 10B

START → HALT ENERGIZATION OF SOLENOID COIL (S21) → START MOVEMENT OF POPPET (S22) → START MOVEMENT OF SMALL SPOOL (S23) → COMPLETE MOVEMENT OF SMALL SPOOL (S24) → END

FIG. 11

# FIG. 12

EP 2 871 371 B1

EP 2 871 371 B1

FIG. 13

FIG. 14

EP 2 871 371 B1

FIG. 15

EP 2 871 371 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010168899 A
- US 3234857 A
- GB 1270958 A
- US 3329159 A